# EUROPEAN PATENT APPLICATION

(11) **EP 4 287 362 A1**
(43) Date of publication of application: **06.12.2023**
(21) Application number: 22762960.7
(22) Date of filing: 15.02.2022
(51) Int. Cl.: H01M 12/08, H01M 4/86, B01D 53/32, C01B 32/50

(54) **CARBON DIOXIDE ADSORPTION BATTERY AND CHARGE/DISCHARGE DEVICE**

(30) Priority: 04.03.2021 JP 2021034204
(71) Applicant: Kuraray Co., Ltd., Kurashiki-shi, Okayama 710-0801 (JP)
(72) Inventor: IWASAKI, Hideharu, Osaka-shi, Osaka 530-8611 (JP)
(74) Representative: Müller-Boré & Partner Patentanwälte PartG mbB
(86) International application number: PCT/JP2022/005996
(87) International publication number: WO 2022/185903

(57) **Abstract**

One aspect of the present invention is a carbon dioxide adsorption battery including: a positive electrode; a negative electrode; a separator disposed between the positive electrode and the negative electrode; and electrolyte layers respectively disposed between the positive electrode and the separator and between the negative electrode and the separator, wherein the positive electrode is a gas-permeable electrode, each of the electrolyte layers includes an electrolytic solution capable of dissolving carbon dioxide, and a redox compound having an N-oxy radical group within a molecule, and the separator suppresses permeation of the redox compound but is permeable to the electrolytic solution.

## Description

### Technical Field

The present invention relates to a carbon dioxide adsorption battery and a charge/discharge device.

### Background Art

Carbon dioxide is not only a substance that occupies about 0.04% of the atmosphere and is widely present on the earth, but is also widely used in industry. Examples of the utilizing method of carbon dioxide include: foaming gases for carbonated beverages, for bathwater additives, and for fire extinguishing compositions; dry ice used for refrigeration or the like; and emergency replenishment air for bicycle tires. In addition, when brought into its supercritical fluid state, carbon dioxide can also be used as an extraction solvent for extracting caffeine and the like. Moreover, carbon dioxide is also used for a laser used for machining in the industrial field, or for carbon-dioxide laser utilized in a laser surgical unit, and the like. Furthermore, instead of using fluorocarbon refrigerant, carbon dioxide is sometimes used as a compressor refrigerant. Carbon dioxide is also used in the agricultural field, for example, in carbon dioxide application for accelerating the growth of plants in forcing cultivation of strawberries and of aquatic plants in ornamental aquarium, and the like. Carbon dioxide is also used in controlled atmosphere (CA) storage of fresh produce.

Since carbon dioxide is used in various fields as stated above, there is a need for a method to obtain carbon dioxide by, for example, separating carbon dioxide from a gas (such as air) that contains carbon dioxide. Carbon dioxide is also said to be a substance causing global warming. From this point as well, it is required to use carbon dioxide by separating carbon dioxide from gases that contain carbon dioxide. In order to utilize carbon dioxide, there are demands for the developments of methods to separate carbon dioxide from gases that contain carbon dioxide, of devices to adsorb and separate carbon dioxide, of devices to use carbon dioxide, and the like, for example.

Various methods have been proposed as a method to separate carbon dioxide from a mixture of gases (such as air) containing oxygen and carbon dioxide. Examples of the separation method include a method using an adsorbent for carbon dioxide to adsorb carbon dioxide in the air, and subsequently adsorbing the carbon dioxide adsorbed in the adsorbent to separate carbon dioxide from the air. Examples of the adsorbent for adsorbing carbon dioxide include activated carbon, an amine-based solvent, and a potassium carbonate aqueous solution. More specifically, the examples of the carbon dioxide separating method using an adsorbent include a pressure swing adsorption (PSA) process in which carbon dioxide is pressurized to be adsorbed to an adsorbent under high pressure, and then is depressurized so that carbon dioxide is desorbed from the adsorbent. Examples of the adsorbent used for separating carbon dioxide in the PSA process include the adsorbent described in Patent Literature 1.

Patent Literature 1 describes a carbon dioxide adsorbent including a composition obtained from the ion-exchange of 2 to 80% of sodium ions of a sodium-containing aluminosilicate with equivalents of barium ions. Patent Literature 1 discloses that an adsorbent having a high selectivity ratio of carbon dioxide and a high absorption capacity even in wet conditions can be provided. Patent Literature 1 discloses that this adsorbent can be suitably used in PSA process to separate and concentrate carbon dioxide.

Examples of the devices to adsorb and separate carbon dioxide include an acidic gas adsorption/desorption device described in Patent Literature 2 and a carbon dioxide separation device described in Patent Literature 3.

Patent Literature 2 describes an acidic gas adsorption/desorption device including: an acidic gas adsorption/desorption layer containing a base material and a compound enabling to perform adsorption and desorption of an acidic gas such as carbon dioxide by performing oxidation and reduction; and a pair of electrodes sandwiching the acidic gas adsorption/desorption layer.

Patent Literature 3 describes a carbon dioxide separation device including: an electrolyte layer; a pair of electrodes provided on the electrolyte layer with the electrolyte layer interposed therebetween; and a voltage application unit configured to apply a voltage between the pair of electrodes, wherein each of the pair of electrodes is a gas-permeable electrode, and the electrolyte layer includes: an electrolytic solution capable of dissolving carbon dioxide; and a redox compound having an N-oxy radical group within a molecule.

Examples of the devices to use carbon dioxide include the batteries described in Non-Patent Literature 1 and Non-Patent Literature 2.

Non-Patent Literature 1 proposes, as a method of utilizing carbon dioxide, a battery configured to be charged while absorbing carbon dioxide.

Non-Patent Literature 2 proposes a carbon dioxide rechargeable battery incorporating a redox system. Specifically, there is proposed a carbon dioxide rechargeable battery in which poly-1,4-anthraquinone and polyvinyl ferrocene are respectively used in a negative electrode and a positive electrode.

### Citation List

### Patent Literature

Patent Literature 1: JP H07-39752 A
Patent Literature 2: JP 2015-36128 A
Patent Literature 3: JP 2018-1131 A

### Non Patent Literature

Non-Patent Literature 1: Aliza Khurram et al., "Tailoring the Discharge Reaction in Li-CO2 Batteries through Incorporation of CO2 Capture Chemistry", Joule 2, 2649-2666, December 19, 2018
Non-Patent Literature 2: Sahag Voskian et al., "Faradaic electro-swing reactive adsorption for CO2 Capture", Energy & Environmental Science, 2019, 12, 3530-3547

### Summary of Invention

An object of the present invention is to provide a carbon dioxide adsorption battery configured to be chargeable while easily adsorbing carbon dioxide from a gas that contains carbon dioxide. Another object of the present invention is to provide a charge/discharge device including the above-mentioned carbon dioxide adsorption battery.

One aspect of the present invention is a carbon dioxide adsorption battery including: a positive electrode; a negative electrode; a separator disposed between the positive electrode and the negative electrode; and electrolyte layers respectively disposed between the positive electrode and the separator and between the negative electrode and the separator, wherein the positive electrode is a gas-permeable electrode, each of the electrolyte layers includes an electrolytic solution capable of dissolving carbon dioxide, and a redox compound having an N-oxy radical group within a molecule, and the separator suppresses permeation of the redox compound and is permeable to the electrolytic solution.

### Brief Description of Drawings

FIG. 1 is a schematic cross-sectional view illustrating an example of a configuration in a carbon dioxide adsorption battery during charging according to an embodiment of the present invention.
FIG. 2 is a schematic cross-sectional view illustrating an example of a configuration in the carbon dioxide adsorption battery during discharging according to the embodiment of the present invention.
FIG. 3 is a schematic cross-sectional view illustrating another example of the configuration in the carbon dioxide adsorption battery during charging according to the embodiment of the present invention.
FIG. 4 is a schematic cross-sectional view illustrating another example of the configuration in the carbon dioxide adsorption battery during charging according to the embodiment of the present invention.
FIG. 5 is a schematic cross-sectional view illustrating another example of the configuration in the carbon dioxide adsorption battery during discharging according to the embodiment of the present invention.
FIG. 6 is a schematic view illustrating a configuration of an example of a charge/discharge device according to an embodiment of the present invention.

### Description of Embodiments

In a method of separating carbon dioxide by PSA process, for example, in a method using an adsorbent described in Patent Literature 1 or the like, pressurization and depressurization are required as mentioned above. Moreover, as long as a method of separating carbon dioxide uses an adsorbent, even if it is a method other than PSA process, for example, heat treatment or the like is required not only in the operation of adsorbing carbon dioxide on the adsorbent but also in the operation of desorbing the carbon dioxide adsorbed to the adsorbent. For this reason, a relatively large amount of energy or a relatively large-sized device has sometimes been required in the separating method of carbon dioxide with use of an adsorbent.

A separating method of carbon dioxide is expected to be capable of separating carbon dioxide by a simple method without using much energy for the separation of carbon dioxide and without using a relatively large-scale device.

Patent Literature 2 discloses that adsorption and desorption of an acidic gas can be performed in a solid state. Specifically, in the method described in Patent Literature 2, first of all, a voltage is applied between the electrodes, thereby allowing the acidic gas adsorption/desorption layer to adsorb the acidic gas. Thereafter, the polarity of the voltage input applied between the electrodes is reversed so that the current flows through the acidic gas adsorption/desorption layer disposed between the electrodes in the direction opposite to the direction of current flowing therethrough at the time of adsorption, thereby desorbing the acidic gas from the acidic gas adsorption/desorption layer. As described above, in the method described in Patent Literature 2, the polarity of the voltage input applied between the electrodes at the time of adsorbing the acidic gas to the acidic gas adsorption/desorption layer is reversed from the polarity at the time of desorbing the adsorbed acidic gas from the acidic gas adsorption/desorption layer. Focusing on carbon dioxide as the acidic gas, even in an attempt to separate carbon dioxide by the device described in Patent Literature 2 or the like, the polarity of the voltage input applied between the electrodes has been required to be reversed as described above. From this reason, a relatively large amount of energy or a relatively large-sized device has been sometimes required in the method described in Patent Literature 2, as in the case of using the adsorbent described in Patent Literature 1.

Patent Literature 3 discloses that a carbon dioxide separation device capable of facilitating the separation of carbon dioxide from a gas that contains carbon dioxide can be provided. Patent Literature 3 discloses that the carbon dioxide separation device can separate carbon dioxide without reversing the polarity of the voltage input applied between the pair of electrodes at the time of adsorbing carbon dioxide from the polarity at the time of releasing carbon dioxide. Specifically, it is disclosed that when a voltage is applied between a pair of electrodes included in the carbon dioxide separation device, carbon dioxide that has passed through one electrode is bound to a compound having an N-oxy radical group within the molecule, and the compound having this carbon dioxide bound flows to the other electrode side, where carbon dioxide is released from the compound.

According to the study of the present inventor, the carbon dioxide separation device described in Patent Literature 3 could not store electricity. Specifically, the reason why the carbon dioxide separation device described in Patent Literature 3 cannot store electricity is considered to be based on that a flow related to carbon dioxide is continuously carried out by applying a voltage between the pair of electrodes, as described above, and therefore the current always flows in one direction during separating carbon dioxide.

Non-Patent Literature 1 shows a storage battery that adsorbs carbon dioxide during charging, but according to the study of the present inventor, it has been found that the storage battery described in Non-Patent Literature 1 is poor in durability and has a short battery cycle life and the like, and hence is difficult to be put into practical use.

Non-Patent Literature 2 discloses a storage battery that adsorbs carbon dioxide during charging, similarly to the technique described in Non-Patent Literature 1. However, a primary electron acceptor of a quinone compound such as poly-1,4-anthraquinone is used in the adsorption of carbon dioxide, and such a quinone compound is known to be poor in heat resistance. Moreover, a ferrocene-type compound having iron as a central metal is used in a positive electrode which is a counter electrode of a negative electrode where the quinone compound is used, and a special and expensive compound such as polyvinyl ferrocene is used as the ferrocene-type compound, which is economically unfavorable.

From these reasons, there is a need to develop a secondary battery capable of adsorbing carbon dioxide during charging by using another materials other than these materials also for effective use of carbon dioxide.

As a result of various studies, the present inventor has found that the present invention described below can achieve the above-described object to provide a carbon dioxide adsorption battery capable of being charged while easily adsorbing carbon dioxide from a gas that contains carbon dioxide.

Hereinafter, embodiments according to the present invention will be described, but the present invention is not limited thereto.

### [Carbon dioxide adsorption battery]

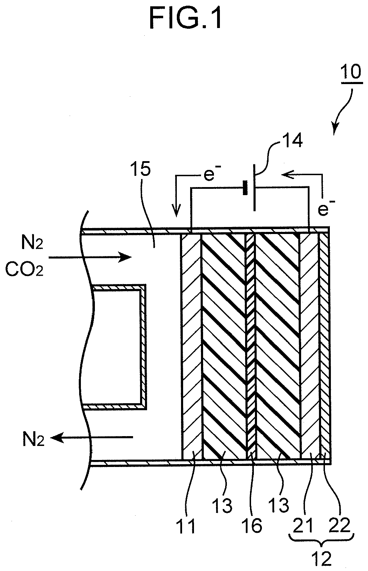

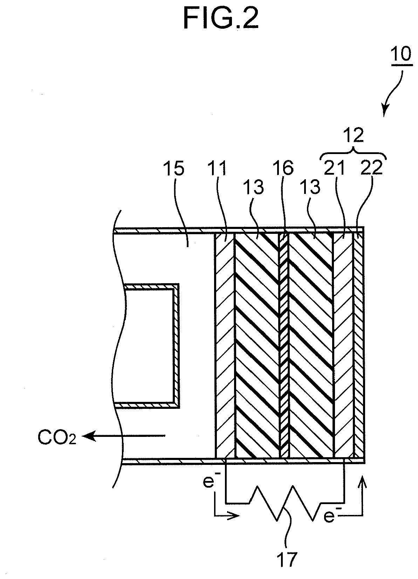

As shown in FIGS. 1 and 2, a carbon dioxide adsorption battery 10 according to an embodiment of the present invention includes: a positive electrode 11; a negative electrode 12; a separator 16 disposed between the positive electrode 11 and the negative electrode 12; and electrolyte layers 13 respectively disposed between the positive electrode 11 and the separator 16 and between the negative electrode 12 and the separator 16. In other words, the carbon dioxide adsorption battery 10 includes: a separator 16; electrolyte layers 13 respectively provided on both sides of the separator 16; and a pair of electrodes 11 and 12 including a positive electrode 11 and a negative electrode 12 each provided on the electrolyte layer 13 with the electrolyte layer 13 interposed therebetween. The positive electrode 11 is a gas-permeable electrode. Each of the electrolyte layers 13 includes an electrolytic solution capable of dissolving carbon dioxide, and a compound having an N-oxy radical group within a molecule. The separator 16 suppresses permeation of the redox compound and is permeable to the electrolytic solution. In other words, the separator 16 is less permeable to the redox compound than to the electrolytic solution. The separator 16 is preferably one that is permeable to the electrolytic solution and does not allow the redox compound to permeate therethrough. The carbon dioxide adsorption battery 10 may include a flow path 15 through which gases flow while being in contact with the positive electrode 11. The flow path 15 is not particularly limited as long as it is a flow path that allows gasses to permeate therethrough.

Note that, FIGS. 1 and 2 are schematic cross-sectional views illustrating an example of a configuration of a carbon dioxide adsorption battery according to an embodiment of the present invention (the carbon dioxide adsorption battery 10), in which FIG. 1 shows the carbon dioxide adsorption battery 10 during charging, and FIG. 2 shows the carbon dioxide adsorption battery 10 during discharging.

While the carbon dioxide adsorption battery 10 is being charged, a voltage is applied between the positive electrode 11 and the negative electrode 12 (between a pair of electrodes including the positive electrode 11 and the negative electrode 12) so that the potential of the positive electrode 11 becomes lower than the potential of the negative electrode 12. The manner of charging the carbon dioxide adsorption battery 10 is not particularly limited as long as a voltage can be applied as described above. Examples of the manner of charging the carbon dioxide adsorption battery 10 include a manner in which the carbon dioxide adsorption battery 10 is charged by way of providing a voltage application unit 14 configured to apply a voltage between the pair of electrodes including the positive electrode 11 and the negative electrode 12 so that the potential of the positive electrode 11 becomes lower than the potential of the negative electrode 12 as illustrated in FIG. 1. As shown in FIG. 2, the carbon dioxide adsorption battery 10 is discharged by way of providing a resistor 17 or the like between the pair of electrodes including the positive electrode 11 and the negative electrode 12. Note that the positive electrode 11 is a cathode electrode, which serves as an electrode on the side of capturing carbon dioxide from a gas that contains carbon dioxide during charging, and serves as an electrode on the side of releasing the captured carbon dioxide during discharging. Note that, the negative electrode 12 is an anode electrode.

The carbon dioxide adsorption battery 10 according to the present embodiment can easily separate and adsorb carbon dioxide from a gas that contains carbon dioxide. Specifically, according to the carbon dioxide adsorption battery 10, as illustrated in FIG. 1, when a potential is applied between the electrodes 11 and 12 by the voltage application unit 14 so that the potential of the positive electrode 11 becomes lower than the potential of the negative electrode 12, carbon dioxide is separated from a gas that contains carbon dioxide as stated below. In addition, the carbon dioxide adsorption battery 10 is charged by applying a voltage in this manner. Therefore, according to the carbon dioxide adsorption battery 10, when a gas (e.g., air or the like) that contains carbon dioxide is circulated in the flow path 15 thereby allowing the carbon dioxide to contact with the positive electrode 11, the carbon dioxide is adsorbed (fixed) to the electrolyte layer 13, and at the same time the carbon dioxide adsorption battery 10 is charged as a battery. In the carbon dioxide adsorption battery 10 during discharging as illustrated in FIG. 2, carbon dioxide is released from the electrolyte layer 13.

According to the carbon dioxide adsorption battery 10, during charging, a gas with a carbon dioxide concentration lower than that of a gas (such as air) supplied from the flow path 15 is emitted, and during discharging, a gas with a carbon dioxide concentration higher than that of the gas supplied from the flow path 15 is emitted. The gas released from the carbon dioxide adsorption battery during discharging is specifically a gas with a very high carbon dioxide concentration since it is mainly the gas that was adsorbed to the carbon dioxide adsorption battery during charging. From these reasons, the carbon dioxide adsorption battery 10 is capable of concentrating carbon dioxide.

Therefore, the carbon dioxide adsorption battery 10 can adsorb carbon dioxide during charging and release carbon dioxide during discharging. In other words, while the carbon dioxide adsorption battery 10 is being charged, carbon dioxide has a higher affinity for the electrolyte layer 13, and while the carbon dioxide adsorption battery 10 is being discharged, carbon dioxide has a lower affinity for the electrolyte layer 13. By such application of a voltage between the pair of electrodes 11 and 12, the affinity of carbon dioxide for the electrolyte layer 13 can be changed, whereby carbon dioxide can be adsorbed or released. Carbon dioxide can be thereby concentrated by way of the adsorption and release. The adsorption and release of carbon dioxide are carried out by applying a voltage, and thus can be carried out even at room temperature and at atmospheric pressure, or the like.

The action mechanism in the carbon dioxide adsorption battery 10 is considered to be based on the followings.

The positive electrode 11 can allow a gas present around the positive electrode 11 to permeate therethrough. When the gas permeates through the positive electrode 11, the gas that has permeated through the positive electrode 11 comes into contact with the electrolyte layer 13. As a result of this, the carbon dioxide contained in the gas present around the positive electrode 11 is dissolved in an electrolytic solution contained in the electrolyte layer 13.

While the carbon dioxide adsorption battery 10 is being charged, a voltage is applied between the pair of electrodes 11 and 12 including the positive electrode 11 and the negative electrode 12 so that the potential of the positive electrode 11 becomes lower than the potential of the negative electrode 12, that is, so that the potential of the negative electrode 12 becomes higher than the potential of the positive electrode 11.

In the redox compound contained in the electrolyte layer 13, an N-oxy radical group is reduced to an N-oxy anion group on the side close to the positive electrode 11, as shown in the following formula (2), since the potential of the positive electrode 11 is higher than the potential of the negative electrode 12. Hereupon, as shown in the following formula (3), carbon dioxide dissolved in the electrolytic solution is bound to the N-oxy anion group, and hence carbon dioxide is facilitated to dissolve in the electrolytic solution. For this reason, while the carbon dioxide adsorption battery 10 is being charged, carbon dioxide is captured from the positive electrode 11 side, and carbon dioxide is adsorbed to the electrolyte layer 13.

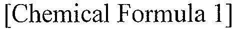

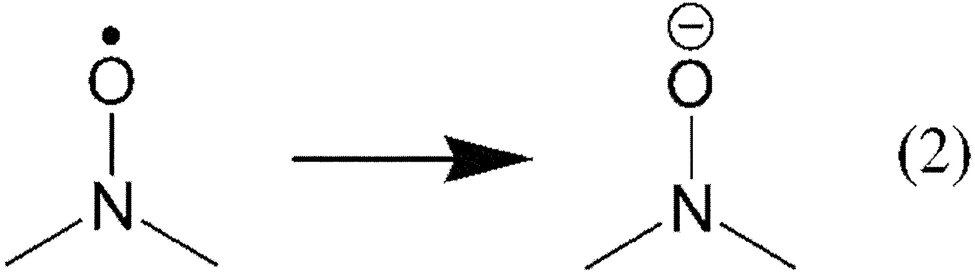

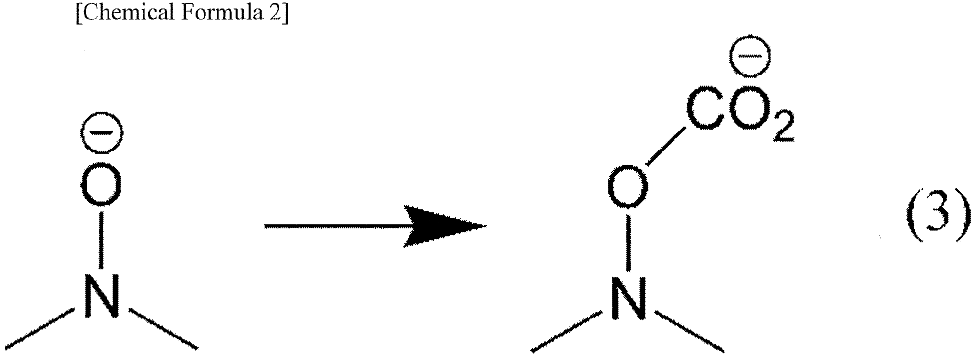

On the other hand, in the redox compound contained in the electrolyte layer 13, an N-oxy radical group is oxidized to an N-oxy cation group on the side close to the negative electrode 12, as shown in the following formula (4), since the potential of the negative electrode 12 is lower than the potential of the positive electrode 11.

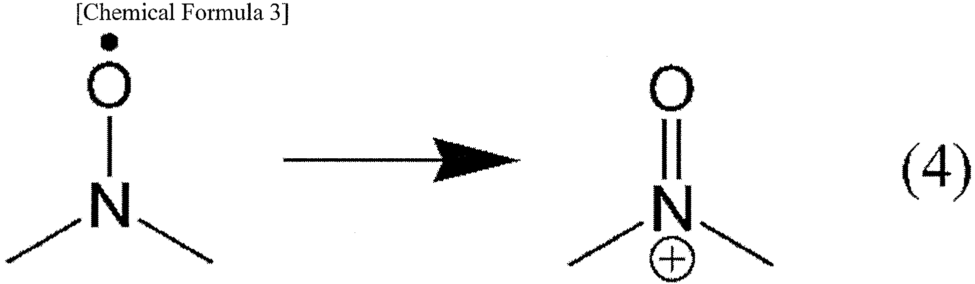

The separator 16 is permeable to the electrolytic solution, and suppresses permeation of the redox compound. In other words, the redox compound is less likely to permeate through the separator 16 than the electrolytic solution. For this reason, the redox compound in which the N-oxy radical group is reduced to the N-oxy anion group and the redox compound having carbon dioxide bound are less likely to permeate through the separator to migrate toward the negative electrode side. Therefore, even after charging is stopped, as long as the battery is not discharged, these redox compounds are retained in the electrolyte layer 13 on the side from the separator 16 to the positive electrode 11. The redox compound in which the N-oxy radical group is oxidized to the N-oxy cation group is also less likely to permeate through the separator 16 to migrate toward the positive electrode 11 side. Therefore, even after charging is stopped, as long as the battery is not discharged, the redox compound having the N-oxy cation group within the molecule is retained in the electrolyte layer 13 on the side from the separator 16 to the negative electrode 12. From these reasons, the carbon dioxide adsorption battery 10 can maintain a charged state.

Next, when the charged carbon dioxide adsorption battery 10 is discharged, as shown in the following formula (5), the N-oxy cation group is reverted to the N-oxy radical group in the electrolyte layer 13 on the side from the separator 16 to the negative electrode 12. In the electrolyte layer 13 on the side from the separator 16 to the positive electrode 11, carbon dioxide is desorbed from the redox compound as shown in the following formula (6), and the N-oxy anion group is reverted to the N-oxy radical group as shown in the following formula (7). Hence, during discharging, the carbon dioxide adsorption battery 10 can release carbon dioxide from the positive electrode 11 side. The gas released from the carbon dioxide adsorption battery 10 during discharging is mainly a gas that has been adsorbed on the carbon dioxide adsorption battery 10 during charging, and hence is a gas with a very high carbon dioxide concentration. As a result of this, the carbon dioxide adsorption battery 10 is capable of concentrating carbon dioxide.

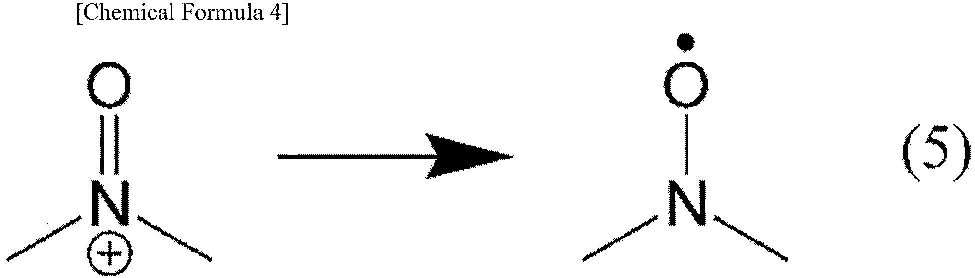

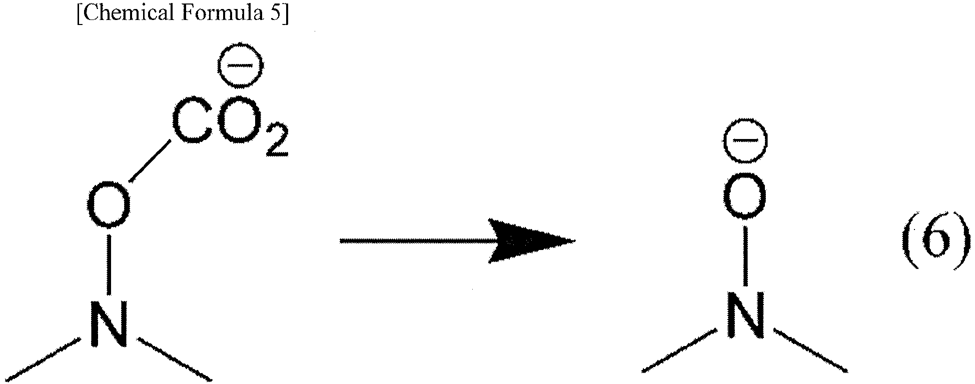

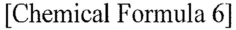

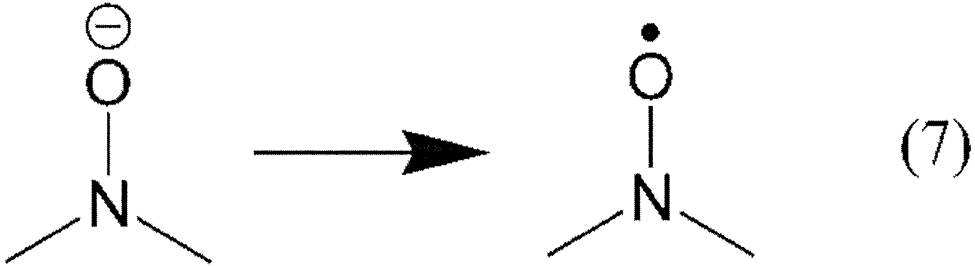

As stated above, it is considered that the carbon dioxide adsorption battery 10 can adsorb carbon dioxide during charging and can release carbon dioxide during discharging, and can be charged while easily adsorbing carbon dioxide from a gas that contains carbon dioxide. In addition, it is considered that the carbon dioxide adsorption battery 10 is capable of concentrating carbon dioxide by way of the adsorption and release of carbon dioxide as described above. Moreover, the carbon dioxide adsorption battery 10 is excellent in durability because of using not the quinone compound but a redox compound having an N-oxy radical group within the molecule having higher durability than the quinone compound.

### (Positive electrode)

The positive electrode 11 is not particularly limited as long as it is a gas-permeable electrode. In other words, the positive electrode 11 is required to be a conductive member that is permeable to a gas such as carbon dioxide and is able to carry current to the electrolyte layer 13 sandwiched between the pair of electrodes 11 and 12. Furthermore, the positive electrode 11 is preferably a porous body having conductivity to the extent that electron transfer is not inhibited, capable of storing electric charge, excellent in air permeability, and having a large gas contact area. Examples of the positive electrode 11 specifically include an electrode made of a porous conductive material, and more specifically include: a porous body containing carbon as its main component; a porous body made of carbon; and a porous metal layer. Examples of the porous conductive material include: a porous metal; a porous body containing carbon as its main component; and a porous body made of carbon. The porous conductive material may be used singly, or two or more kinds thereof may be used in combination. In other words, the positive electrode 11 may be an electrode made of a single conductive material among these porous conductive materials, or may be an electrode made of a combination of two or more conductive materials.

Examples of the carbon contained in the porous body specifically include: graphite; carbon nanotube; activated carbon such as activated carbon fiber: and carbonaceous materials such as carbon fiber. The carbon is preferably graphite, carbon nanotube, activated carbon, or carbon fiber, and more preferably activated carbon such as activated carbon fiber in terms of corrosion resistance and specific surface area. As the carbon, various carbonaceous materials may be used singly or in combination of two or more thereof. The porous body containing the carbon is preferably one obtained by forming the carbonaceous material into a cloth shape or a felt shape. Thus, examples of the electrode which is the porous body specifically include carbon sheets, carbon cloths, and carbon paper. Examples of the electrode which is the porous body also include: a carbon-based electrode made by using activated carbon or carbon fiber; and an electrode having a high porosity made by using a needle-shaped conductive material. Among the various electrodes, the electrode is preferably an electrode made of a conductive member containing at least one selected from the group consisting of graphite, carbon nanotubes, activated carbon, and carbon fibers. It is considered that when the electrode is configured in this manner, gases can suitably permeate therethrough, and a voltage can be suitably applied between the pair of electrodes 11 and 12 by the voltage application unit 14. For this reason, by using this positive electrode 11, it is possible to obtain a carbon dioxide adsorption battery capable of more suitably adsorbing carbon dioxide from a gas that contains carbon dioxide during charging and more suitably releasing carbon dioxide during discharging.

The porous metal layer is a metal layer having a large number of pores formed therein. The pores are preferably formed over the entire metal layer in view of that the porous metal layer is excellent in air permeability. The method of obtaining the porous metal layer is not particularly limited as long as it is a method (porositization method) by which a large number of pores are formed in a metal layer not yet provided with the pores (metal layer before forming the pores). Examples of the method include: physical methods such as cutting, polishing, and sandblasting; and chemical methods such as electrolytic etching and electroless etching using an etching solution such as an acid or a base. Note that, as the porositization method, each of the above-mentioned methods may be performed singly, or two or more thereof may be performed in combination. From the viewpoint of increasing the surface area, the porositization method is preferably a chemical method in order to make the pores (fine pores) to be formed finer (to form finer pores). The material of the metal layer is not particularly limited, and examples thereof include aluminum, copper, silver, gold, iron, titanium, molybdenum, tungsten, nickel, and alloys thereof. Among them, the material of the metal layer is preferably aluminum in terms of price and workability. The metal layer before forming the pores is preferably so-called aluminum foil.

The BET specific surface area of the positive electrode 11 is not particularly limited, but is, for example, preferably 1 m²/g or more, more preferably 100 m²/g or more, and still more preferably 500 m²/g or more. The BET specific surface area of the positive electrode 11 is preferably as large as possible in terms of gas permeability (air permeability), but the BET specific surface area of the positive electrode 11 is preferably 3000 m²/g or less in terms of the strength and the like of the positive electrode 11. Therefore, the BET specific surface area of the positive electrode 11 is preferably from 1 to 3000 m²/g, more preferably from 100 to 2500 m²/g, and still more preferably from 500 to 2000 m²/g. When the BET specific surface area of the positive electrode 11 is too small, the gas permeability (air permeability) decreases, and carbon dioxide permeation tends to be inhibited. When the BET specific surface area of the positive electrode 11 is too large, the strength and the like of the electrode tend to be insufficient. From these reasons, when the BET specific surface area of the electrode 11 is within the above-mentioned range, adsorption and release of carbon dioxide can be realized for a long period of time, and thus the device can be used as the carbon dioxide battery for a long period of time. Note that the BET specific surface area refers to a specific surface area measured by the BET method, and can be measured by a known method. Examples of the measuring method of the BET specific surface area include a method in which nitrogen adsorption isotherm measurements are carried out and the BET specific surface area is calculated from the obtained adsorption isotherm.

The positive electrode 11 may further include a current collector. In other words, the positive electrode 11 may be one made of the porous body, or may be one including the porous body and the current collector. The current collector is not particularly limited as long as it does not inhibit the permeation of the gas. As the current collector, for example, there can be used one that is made of a material having conductivity and that has an opening so as not to interfere the gas permeation. More specifically, the current collector may be one made of a metal such as a mesh metal, a punching metal, or an expanded metal, or may be one obtained by plating a woven fabric or a nonwoven fabric made of natural fibers or synthetic fibers so as to have conductivity. As the metal that can be used as the current collector, for example, stainless steel, iron, nickel, copper, and the like can be used.

In the positive electrode 11 including the porous body and the current collector, the porous body and the current collector are preferably combined together, and a method of combining the porous body and the current collector is not particularly limited. The combined body of the porous body and the current collector may be one obtained by partially combining the porous body and the current collector by using, for example, a method such as ultrasonic welding or plasma welding as a combining method so as to ensure conductivity. The combined body of the porous body and the current collector may be one obtained by combining the porous body and the current collector with a conductive material such as a conductive adhesive being interposed therebetween so as to have conductivity. The conductive material is not particularly limited, and for example, one obtained by dispersing fine particles of a metal such as silver, gold, and nickel; a carbon material-based conductive material; a conductive polymer; or the like can be used.

### (Negative electrode)

The negative electrode 12 is not particularly limited as long as it is a conductive member that is able to carry current to the electrolyte layer 13 sandwiched between the pair of electrodes 11 and 12. The negative electrode 12 is preferably, for example, an electrode including a gas permeation blocking portion that hinders the gas permeation. The negative electrode 12 is preferably configured so as to avoid contact with the outside air, for example. In a case where the negative electrode includes the gas permeation blocking portion that hinders the gas permeation, and in a case where the negative electrode is configured so as to avoid contact with the outside air, as described above, the carbon dioxide adsorption battery can be charged while easily adsorbing carbon dioxide from the gas that contains carbon dioxide, and is capable of further maintaining the charged state. This is considered to be based on the following.

In the carbon dioxide adsorption battery 10, as described above, the redox compound migration is suppressed by the separator 16, and the redox compound may possibly pass through the separator 16. For instance, in the carbon dioxide adsorption battery 10, the above-described redox compound having carbon dioxide bound may possibly migrate across the separator 16 from the positive electrode 11 side to the negative electrode 12 side in the electrolyte layer 13. During the time of charging or in a state of maintaining the charged state, when the redox compound having carbon dioxide bound migrates as described above, the redox compound is oxidized in the vicinity of the negative electrode 12, whereby carbon dioxide is desorbed from the redox compound, and the N-oxy anion group is reverted to the N-oxy radical group. During that time, when carbon dioxide is released from the negative electrode 12 side, the redox compound having carbon dioxide bound may be facilitated to migrate. Thus, when the negative electrode 12 includes a gas permeation blocking portion that hinders the gas permeation and when the negative electrode 12 is configured so as to avoid contact with outside air, it is considered that such facilitation of the migration can be prevented from occurring, and the charged state can be further maintained.

When the negative electrode 12 is an electrode including a gas permeation blocking portion that hinders the gas permeation, the negative electrode may be an electrode including a negative electrode main body 21 and the gas permeation blocking portion 22, as illustrated in FIGS. 1 and 2, or the negative electrode may be an electrode formed of a gas permeation blocking portion that has conductivity.

In a case where the negative electrode 12 is an electrode including a negative electrode main body 21 and a gas permeation blocking portion 22, the gas permeation blocking portion 22 is provided on the side of the negative electrode main body 21 opposite to the side facing the electrolyte layer 13. Otherwise, the gas permeation blocking portion 22 may also be provided on the side of the negative electrode main body 21 facing the electrolyte layer 13 as long as the gas permeation blocking portion 22 is provided on the side of the negative electrode main body 21 opposite to the side facing the electrolyte layer 13.

The negative electrode main body 21 is required to be a conductive member that is able to carry current to the electrolyte layer 13 sandwiched between the pair of electrodes 11 and 12. Note that, the negative electrode main body 21 is preferably a conductive member that is capable of storing electric charge and has conductivity to the extent that electron transfer is not inhibited. In view of that the gas permeation blocking portion 22 being provided thereon, the negative electrode main body 21 is preferably permeable to gases in terms of increasing a gas contact area. For these reasons, the negative electrode main body 21 may be one same as the conductive member exemplified as an electrode to be used for the positive electrode 11. Examples of the negative electrode main body 21 specifically include electrodes made of conductive materials such as carbon materials, metal fibers, metal foils, and conductive polymers, and more specifically include electrodes made of carbon fibers, of activated carbon, of graphite, and the like.

The gas permeation blocking portion 22 is not particularly limited as long as the gas permeation can be hindered. Examples of the gas permeation blocking portion 22 include: a metal foil such as an aluminum foil, a copper foil, or a nickel foil; and a plastic foil coated with a conductive material paste such as a conductive polymer, graphite, or silver. Examples of the plastic foil include plastic foils containing polyethylene terephthalate (PET), polypropylene (PP), polyethylene (PE), and the like.

The electrode formed of the gas permeation blocking portion is an electrode configured to serve as both the negative electrode main body and the gas permeation blocking portion. Examples of the electrode formed of the gas permeation blocking portion include an electrode made of a conductive member that is not permeable to gases such as carbon dioxide and is able to carry current to the electrolyte layer 13 sandwiched between the pair of electrodes 11 and 12.

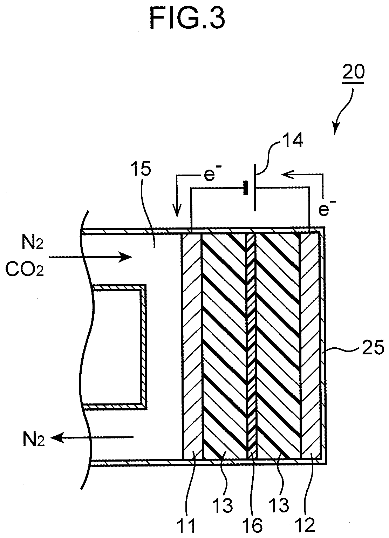

When the negative electrode 12 is configured so as to avoid contact with the outside air, its configuration is not particularly limited as long as the negative electrode 12 does not contact with the outside air. As an example of the case where the negative electrode 12 is configured so as to avoid contact with the outside air, for example, there can be exemplified a carbon dioxide adsorption battery 20 which is surrounded by a housing 25, with the exception of the positive electrode 11 that comes into contact with the air supplied from the flow path 15, as illustrated in FIG. 3. In other words, the carbon dioxide adsorption battery 20 is similar to the carbon dioxide adsorption battery 10, other than that the carbon dioxide adsorption battery 20 is surrounded by the housing 25 so that the negative electrode 12 avoids contact with the outside air. In such a carbon dioxide adsorption battery 20, the negative electrode 12 is not in contact with the outside air as long as the housing 25 is not permeable to gases. The housing 25 is not particularly limited as long as it is not permeable to gases, and may be any one that can be used as a battery housing. Note that, FIG. 3 is a schematic cross-sectional view illustrating another example (the carbon dioxide adsorption battery 20) in the configuration of the carbon dioxide adsorption battery according to the embodiment of the present invention, which illustrates the carbon dioxide adsorption battery 20 during charging.

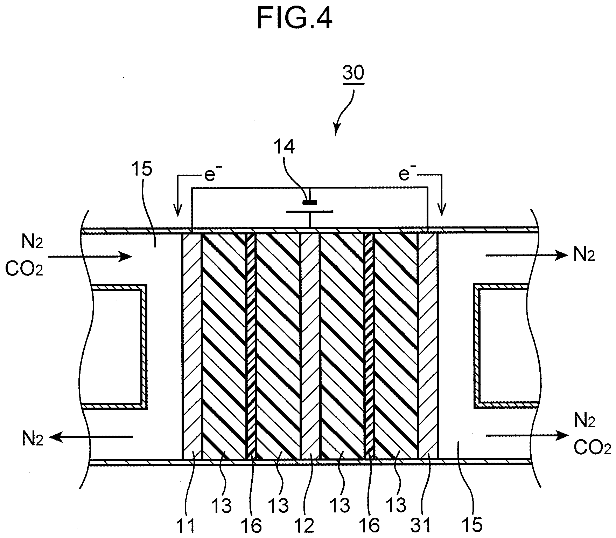

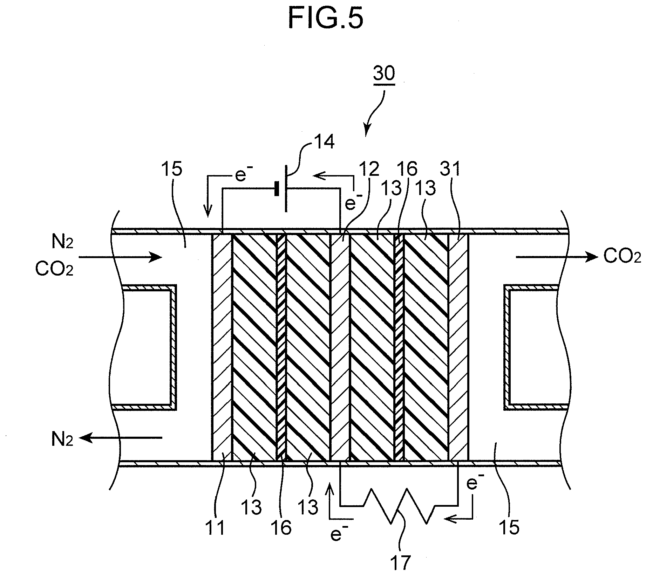

As another example of the negative electrode 12 configured so as to avoid contact with the outside air, for example, there can be exemplified a carbon dioxide adsorption battery 30 including two positive electrodes 11 and 31 as illustrated in FIGS. 4 and 5. The carbon dioxide adsorption battery 30 is similar to the carbon dioxide adsorption battery 10, with the exception that in addition to the positive electrode 11, another positive electrode 31 is further provided aside from the positive electrode 11, and that the electrolyte layer 13 and the separator 16 are provided also between the negative electrode 12 and the positive electrode 31. In other words, the carbon dioxide adsorption battery 30 is similar to the carbon dioxide adsorption battery 10, with the exception that in addition to the positive electrode 11 included in the pair of electrodes 11 and 10, another positive electrode 31 is further provided aside from the positive electrode 11, and that the electrolyte layer 13 and the separator 16 are provided also between the positive electrode 31 and the negative electrode 12 included in the pair of electrodes 11 and 12. The carbon dioxide adsorption battery 30 is similar to the carbon dioxide adsorption battery 10 with the exception of the above, and for example, the positive electrode 31 is not particularly limited as long as it is a gas-permeable electrode, and examples thereof include an electrode used for the positive electrode 11. According to the carbon dioxide adsorption battery 30 having such a configuration, the negative electrode 12 can be configured so as to avoid contact with the outside air. As illustrated in FIG. 4, when the voltage application unit 14 applies a voltage not only between the positive electrode 11 and the negative electrode 12 but also between the negative electrode 12 and the positive electrode 31, the device can be charged not only between the positive electrode 11 and the negative electrode 12 but also between the negative electrode 12 and the positive electrode 31. As illustrated in FIG. 5, the carbon dioxide adsorption battery 30 can be charged between the positive electrode 11 and the negative electrode 12 while discharging between the negative electrode 12 and the positive electrode 31. Although not illustrated, the carbon dioxide adsorption battery 30 can also be charged between the negative electrode 12 and the positive electrode 31 while discharging between the positive electrode 11 and the negative electrode 12. Note that, FIGS. 4 and 5 are schematic cross-sectional views illustrating another example (the carbon dioxide adsorption battery 30) in the configuration of the carbon dioxide adsorption battery according to an embodiment of the present invention. FIG. 4 illustrates a case where both of the pairs of the electrodes are being charged, and FIG. 5 illustrates a case where one of the pair of the electrodes is being charged and the other of the pair of the electrodes is being discharged.

As described above, the positive electrode 11 and the negative electrode 12 are each a conductive member capable of carrying current to the electrolyte layer 13 sandwiched between the pair of electrodes 11 and 12, and the surface resistance value thereof is preferably as small as possible, and is, for example, preferably 1 kQ/sq or less, and more preferably 200 Ω/sq or less. The surface resistance value of each of the electrodes is preferably as small as possible, but practically is limited to 1 Ω/sq. Therefore, the surface resistance value of each of the electrodes is preferably from 1 S2/sq to 1 kQ/sq, and more preferably from 10 to 200 Ω/sq. When the electrode has such a surface resistance value, the electrode can suitably carry current to the electrolyte layer 13, and the carbon dioxide adsorption battery 10 can suitably adsorb carbon dioxide during charging and suitably release carbon dioxide during discharging. Note that the surface resistance value of the positive electrode 31 is the same as each of the surface resistance values of the positive electrode 11 and the negative electrode 12.

The thickness of the positive electrode 11 and the thickness of the negative electrode 12 are not particularly limited, but are preferably thick enough to suitably store electric charge and suitably prevent the electrolytic solution from leaking. The thicknesses of the positive electrode 11 and the negative electrode 12 are, for example, preferably 20 µm or more and 10 mm or less, and more preferably 50 µm or more and 5 mm or less. When the positive electrode 11 and the negative electrode 12 are too thin, the electrodes tend to have an insufficient strength or the like or tend to be less likely to store electric charge. When the positive electrode 11 and the negative electrode 12 are too thick, the size of the carbon dioxide adsorption battery 10 tends to be too large. When the positive electrode 11 is too thick, the gas permeability (air permeability) tends to decrease, and permeation of carbon dioxide tends to be inhibited. Note that the thickness of the positive electrode 31 is the same as the thickness of the positive electrode 11.

### (Electrolyte layer)

The electrolyte layer 13 is not particularly limited as long as it contains: an electrolytic solution capable of dissolving carbon dioxide; and a redox compound having an N-oxy radical group within the molecule. As described above, the electrolyte layer 13 is a carbon dioxide separator that contributes to the separation of carbon dioxide by way of adsorption and release of carbon dioxide.

The thickness of the electrolyte layer 13 is not particularly limited, but is, for example, preferably from 0.1 µm to 2 mm, and more preferably from 1 µm to 1 mm. The thickness of the electrolyte layer on the positive electrode 11 side and the thickness of the electrolyte layer 13 on the negative electrode side are not particularly limited, but each of them are, for example, preferably from 0.1 µm to 2 mm, and more preferably from 1 µm to 1 mm. When the electrolyte layer 13 is too thin, not only the fixed amount of carbon dioxide and the storage amount of electric charge decrease, but also small holes, namely, pinholes tend to be formed in the electrolyte layer 13. Once the pinholes are formed, which may cause concurrence of problems in which carbon dioxide cannot be suitably adsorbed, flowing of an electric current not contributing to the adsorption of carbon dioxide, and the like. In contrast, when the electrolyte layer 13 is too thick, the diffusion of carbon dioxide adsorbed to the electrolyte layer 13 is slow down in the electrolyte layer 13, and discrepancies between the fixed amount of carbon dioxide and the storage amount of electric charge occur, consequently it tends to be difficult to grasp that carbon dioxide is sufficiently adsorbed during charging. This is considered to be based on the following. In the carbon dioxide adsorption battery 10, the diffusion of carbon dioxide and the diffusion of the redox compound having carbon dioxide bound in the electrolyte layer 13 make a larger contribution to the adsorption of carbon dioxide than to charging. Moreover, their diffusions have a greater impact when the electrolyte layer 13 is thick than when it is thin. From these reasons, the difference in the rate related to the carbon dioxide adsorption between when the electrolyte layer 13 is thick and thin is larger than the difference in the rate related to charging between when the electrolyte layer 13 is thick and thin. Hence, when the electrolyte layer 13 is thin, it is easy to ascertain that carbon dioxide is sufficiently adsorbed based on the storage amount, whereas when the electrolyte layer 13 is thick, it is difficult to grasp that carbon dioxide is sufficiently adsorbed based on the storage amount since discrepancies occur between the fixed amount of carbon dioxide and the storage amount of electric charge as described above. This is considered to be the reason why the thicker the electrolyte layer 13, the more difficult to grasp that carbon dioxide is sufficiently adsorbed during charging. For the same reason, when the electrolyte layer 13 is too thick, it tends to be difficult to grasp that carbon dioxide is sufficiently released during discharging.

The electrolytic solution is not particularly limited as long as it is an electrolytic solution capable of dissolving carbon dioxide, and may be an electrolytic solution containing an electrolyte and a solvent, or may be an electrolytic solution containing an ionic liquid. Note that the electrolytic solution capable of dissolving carbon dioxide needs to be an electrolytic solution other than an electrolytic solution incapable of dissolving carbon dioxide, in other words, it needs to be an electrolytic solution capable of dissolving even only a small amount of carbon dioxide, and it is not needed to have a high solubility of carbon dioxide. This is considered to be based on the following. In the carbon dioxide adsorption battery according to the present embodiment, as described above, the bonding and release of carbon dioxide are considered to proceed through bonding and desorbing carbon dioxide to and from the redox compound by a mechanism in which carbon dioxide is captured into the electrolyte layer 13 on the positive electrode 11 side during charging and carbon dioxide is released from the electrolyte layer 13 on the positive electrode 11 side during discharging. Therefore, the adsorption and release of carbon dioxide are considered to proceed when even only a small amount of carbon dioxide dissolves in the electrolytic solution contained in the electrolyte layer 13.

As described above, the electrolytic solution is not particularly limited as long as it is an electrolytic solution capable of dissolving carbon dioxide, but is preferably non-volatile. As described above, the electrolytic solution may be an electrolytic solution containing an electrolyte and a solvent, or may be an electrolytic solution containing an ionic liquid, but is preferably one that is non-volatile and capable of being used as an electrolytic solution. Specifically, the electrolytic solution is preferably an ionic liquid.

The solvent is preferably an electrochemically stable compound having a wide potential window, and may be an aqueous solvent or an organic solvent. Examples of the solvent include water, a carbonate compound, an ester compound, an ether compound, a heterocyclic compound, a nitrile compound, and an aprotic polar compound. Examples of the carbonate compound include dimethyl carbonate, diethyl carbonate, methyl ethyl carbonate, ethylene carbonate, and propylene carbonate. Examples of the ester compound include methyl acetate, methyl propionate, and γ-butyrolactone. Examples of the ether compound include diethyl ether, 1,2-dimethoxyethane, 1,3-dioxosilane, tetrahydrofuran, and 2-methyl-tetrahydrofuran. Examples of the heterocyclic compound include 3-methyl-2-oxazolidinone and 2-methylpyrrolidone. Examples of the nitrile compound include acetonitrile, methoxyacetonitrile, propionitrile, 3-methoxypropionitrile, and nitrile valerate. Examples of the aprotic polar compound include sulfolane, dimethylsulfoxide, and dimethylformamide. As the solvent, each of the exemplified solvents may be used singly, or two or more kinds thereof may be used in combination. Among the solvents exemplified above, the solvent is preferably a carbonate compound such as ethylene carbonate or propylene carbonate, an ester compounds such as γ-butyrolactone, a heterocyclic compound such as 3-methyl-2-oxazolidinone or 2-methylpyrrolidone, or a nitrile compound such as acetonitrile, methoxyacetonitrile, propionitrile, 3-methoxypropionitrile or nitrile valerate. In a case of using two or more kinds thereof in combination as the solvent, water is preferably used in terms of dissolution of carbon dioxide.

The electrolyte is not particularly limited, and examples thereof include a quaternary ammonium salt, an inorganic salt, and a hydroxide. Examples of the quaternary ammonium salt include tetramethylammonium tetrafluoroborate, tetra-n-ethylammonium tetrafluoroborate, tetra-n-propylammonium tetrafluoroborate, tetra-n-butylammonium tetrafluoroborate, n-hexadecyltrimethylammonium tetrafluoroborate, tetra-n-hexadecylammonium tetrafluoroborate, tetra-n-octylammonium tetrafluoroborate, tetra-n-ethylammonium perchlorate, tetra-n-butylammonium perchlorate, and tetraoctadecylammonium perchlorate. Examples of the inorganic salt include lithium perchlorate, sodium perchlorate, potassium perchlorate, sodium acetate, potassium acetate, sodium nitrate, and potassium nitrate. Examples of the hydroxide include sodium hydroxide and potassium hydroxide. Among the electrolytes exemplified above, the electrolyte is preferably tetramethylammonium tetrafluoroborate, tetra-n-ethylammonium tetrafluoroborate, tetra-n-propylammonium tetrafluoroborate, tetra-n-butylammonium tetrafluoroborate, n-hexadecyltrimethylammonium tetrafluoroborate, tetra-n-hexadecylammonium tetrafluoroborate, tetra-n-octylammonium tetrafluoroborate, tetra-n-ethylammonium perchlorate, tetra-n-butylammonium perchlorate, tetraoctadecylammonium perchlorate, lithium perchlorate, sodium perchlorate, sodium acetate, or potassium acetate. Among them, the electrolyte is more preferably tetra-n-ethylammonium tetrafluoroborate, tetra-n-propylammonium tetrafluoroborate, tetra-n-butylammonium tetrafluoroborate, lithium perchlorate, or sodium perchlorate, and still more preferably tetra-n-butylammonium tetrafluoroborate or lithium perchlorate. Otherwise, the electrolyte may be configured as a supporting salt thereof to stabilize carbonate ions or bicarbonate ions and to provide pH buffering capacity. Examples of the electrolyte in this case specifically include sodium hydrogen carbonate, sodium carbonate, acetic acid, and sodium acetate. As the electrolyte, the exemplified electrolytes described above may be used singly, or two or more kinds thereof may be used in combination.

As described above, the electrolytic solution may be an electrolytic solution containing an ionic liquid (ionic fluid). When an ionic liquid is used as the electrolytic solution, the ionic liquid can serve as both an electrolyte and a solvent, even without containing an electrolyte and a solvent as described above. Otherwise, the electrolytic solution needs to contain an ionic liquid, and it may be a liquid containing an electrolyte in an ionic liquid, may be a liquid containing a solvent in an ionic liquid, may be a liquid containing an electrolyte and a solvent in an ionic liquid, or may be an ionic liquid. Moreover, the use of an ionic liquid as the electrolytic solution is preferable in view of that the ionic liquid is less likely to evaporate and has a high flame resistance.

The ionic liquid is not particularly limited as long as it is a known ionic liquid, and examples thereof include an imidazolium-based ionic liquid, a pyridine-based ionic liquid, an alicyclic amine-based ionic liquid, and an azonium amine-based ionic liquid. Examples of the ionic liquid include 1-methyl-3-octylimidazolium tetrafluoroborate, 1-ethyl-3-methylimidazolium tetrafluoroborate, 1-butyl-3-methylimidazolium chloride, 1-butyl-3-methylimidazolium tetrafluoroborate, 1-decyl-3-methylimidazolium tetrafluoroborate, 1,3-dimethoxyimidazolium tetrafluoroborate, 1,3-diethoxyimidazolium tetrafluoroborate, 1-methyl-3-octylimidazolium hexafluorophosphate, 1-ethyl-3-methylimidazolium hexafluorophosphate, 1-butyl-3-methylimidazolium hexafluorophosphate, 1-decyl-3-methylimidazolium hexafluorophosphate, 1,3-dimethoxyimidazolium hexafluorophosphate, and 1,3-diethoxyimidazolium hexafluorophosphate. Among the ionic liquids exemplified above, the ionic liquid is preferably 1-methyl-3-octylimidazolium tetrafluoroborate, 1-ethyl-3-methylimidazolium tetrafluoroborate, 1-butyl-3-methylimidazolium tetrafluoroborate, 1-butyl-3-methylimidazolium bis(trifluoromethylsulfonylimide), 1,3-dimethoxyimidazolium tetrafluoroborate, 1-methyl-3-octylimidazolium hexafluorophosphate, or 1-ethyl-3-methylimidazolium hexafluorophosphate. The ionic liquid is more preferably 1-methyl-3-octylimidazolium tetrafluoroborate, 1,3-dimethoxyimidazolium tetrafluoroborate, 1-butyl-3-methylimidazolium bis(trifluoromethylsulfonylimide), 1-butyl-3-methylimidazolium chloride, or 1-methyl-3-octylimidazolium hexafluorophosphate, the ionic liquid is still more preferably 1-butyl-3-methylimidazolium bis(trifluoromethylsulfonylimide), 1-butyl-3-methylimidazolium chloride, or 1-methyl-3-octylimidazolium tetrafluoroborate.

In the electrolyte layer 13, the electrolytic solution may be gelled. Specifically, the electrolytic solution may be added with a gelling agent so as to be gelled, or a gelled electrolyte or a polymer electrolyte may be used. Examples of the gelling agent include a polymer, a gelling agent using a technique such as a polymer crosslinking reaction, a polymerizable polyfunctional monomer, and an oil gelling agent. The gelled electrolyte and the polymer electrolyte are not particularly limited as long as they can be used as a gelled electrolyte or a polymer electrolyte, and examples thereof include a vinylidene fluoride-based polymer such as polyvinylidene fluoride, an acrylic acid-based polymer such as polyacrylic acid, acrylonitrile-based polymers such as polyacrylonitrile, a polyether-based polymer such as polyethylene oxide, and a compound having an amide structure within its structure.

The redox compound is not particularly limited as long as it is a redox compound having an N-oxy radical group within the molecule. The redox compound is preferably non-volatile and is a redox compound that adsorbs and desorbs carbon dioxide through electrolytic reduction and electrolytic oxidation. In other words, the redox compound is electrolytically reduced whereby carbon dioxide is adsorbed thereto as shown in the formula (2) and the formula (3), and is electrolytically oxidized whereby the carbon dioxide adsorbed thereto is desorbed as shown in the formula (5) and the formula (6). In this redox compound, by way of applying a voltage between the pair of electrodes 11 and 12 with the voltage application unit 14, or by way of any other method, an N-oxy radical group is reduced to an N-oxy anion group and to which carbon dioxide is bound. When the carbon dioxide adsorption battery 10 is discharged, carbon dioxide is desorbed so that an N-oxy anion group is formed, and this N-oxy anion group is oxidized to revert to the N-oxy radical. The redox compound is a compound in which an N-oxy radical group changes through oxidation-reduction in this manner.

Examples of the redox compound specifically include: a compound represented by the following formula (1); and a compound having a group obtained by eliminating one hydrogen atom from the compound represented by the following formula (1). The compound having a group obtained by eliminating one hydrogen atom from the compound represented by the following formula (1) may be any compound having such a group, and may be a compound bound to another low molecular weight compound or may be a polymer compound.

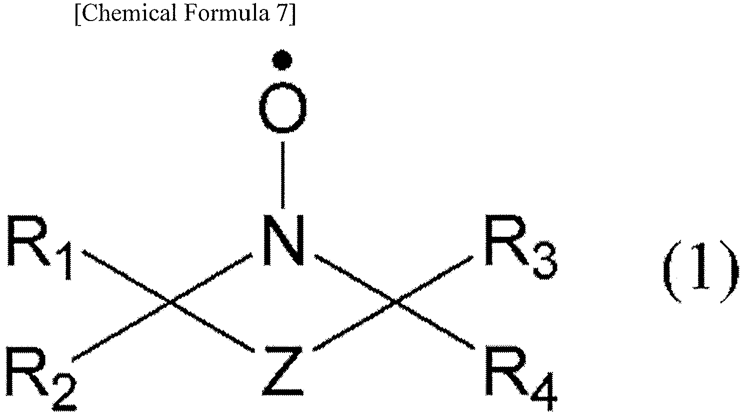

In the formula (1), Z represents -CR₅R₆CR₇R₈-, -CR₉R₁₀CR₁₁R₁₂CR₁₃R₁₄-, -(CR₁₅R₁₆)O-, - (CR₁₇R₁₈)NR₂₇-, -(CR₁₉R₂₀)O(CR₂₁R₂₂)-, or -(CR₂₃R₂₄)NR₂₈(CR₂₅R₂₆)-, and R₁ to R₂₈ each independently represent a hydrogen atom or a substituent.

At least one of R₁ to R₄ is preferably a substituent, it is more preferable that two or more of R₁ to R₄ are substituents, and it is still more preferable that all four of R₁ to R₄ are substituents. In other words, the compound represented by the formula (1) is preferably a compound in which two quaternary carbons are bound to the N-oxy radical group. The redox compound is preferably a compound in which two quaternary carbons are bound to the N-oxy radical group, or a compound having a group obtained by eliminating one hydrogen atom from the compound. In such a compound, oxidation-reduction by the N-oxy radical group is likely to occur, and it is considered that the adsorption and release of carbon dioxide by the redox compound can be more suitably carried out. For this reason, when such a compound is included in the electrolyte layer, it is possible to obtain a carbon dioxide adsorption battery capable of more suitably adsorbing carbon dioxide from a gas containing carbon dioxide during charging and more suitably releasing carbon dioxide during discharging.

Z in the compound represented by the formula (1) is preferably -CR₅R₆CR₇R₈-, - CR₉R₁₀CR₁₁R₁₂CR₁₃R₁₄-, -(CR₁₉R₂₀)O(CR₂)R₂₂)-, or -(CR₂₃R₂₄)NR₂₈(CR₂₅R₂₆)-.

Examples of the substituent in R₁ to R₂₈ include a hydrocarbyl group having 1 to 30 carbon atoms, a hydrocarbyloxy group having 1 to 10 carbon atoms, a hydroxy group (hydroxyl group), an optionally substituted amino group (unsubstituted or substituted amino group), a carboxyl group, a thiol group, and an optionally substituted silyl group (unsubstituted or substituted silyl group). Among them, the substituent in R₁ to R₂₆ is preferably a hydrocarbyl group having 1 to 30 carbon atoms, a hydroxy group, or an unsubstituted or substituted amino group. The substituent in R₂₇ or R₂₈ is preferably a hydrocarbyl group having 1 to 30 carbon atoms.

Note that the term "optionally substituted" herein includes both cases where the hydrogen atoms included in the compound or in the group listed immediately after the term each are unsubstituted and where some or all of the hydrogen atoms included therein are substituted with a substituent or substituents.

The hydrocarbyl group is not particularly limited, and may be linear, branched, or cyclic. Examples of the hydrocarbyl group include: methyl group; ethyl group; 1-propyl group; 2-propyl group; 1-butyl group; 2-butyl group; isobutyl group; tert-butyl group; pentyl group; hexyl group; octyl group; decyl group; dodecyl group; 2-ethylhexyl group; 3,7-dimethyloctyl group; cyclopropyl group; cyclopentyl group; cyclohexyl group; 1-adamantyl group; 2-adamantyl group; norbornyl group; ammonium ethyl group; benzyl group; α,α-dimethylbenzyl group; 1-phenethyl group; 2-phenethyl group; vinyl group; propenyl group; butenyl group; oleyl group; eicosapentaenyl group; docosahexaenyl group; 2,2-diphenylvinyl group; 1,2,2-triphenylvinyl group; 2-phenyl-2-propenyl group; phenyl group; 2-tolyl group; 4-tolyl group; 4-trifluoromethylphenyl group; 4-methoxyphenyl group; 4-cyanophenyl group; 2-biphenylyl group; 3-biphenylyl group; 4-biphenylyl group; terphenylyl group; 3,5-diphenylphenyl group; 3,4-diphenylphenyl group; pentaphenylphenyl group; 4-(2,2-diphenylvinyl)phenyl group; 4-(1,2,2-triphenylvinyl)phenyl group; fluorenyl group; 1-naphthyl group; 2-naphthyl group; 9-anthryl group; 2-anthryl group; 9-phenanthryl group; 1-pyrenyl group; chrysenyl group; naphthacenyl group; and corony1 group. Among them, the hydrocarbyl group is preferably a methyl group, an ethyl group, a 1-propyl group, a 2-propyl group, a 1-butyl group, a 2-butyl group, a tert-butyl group, a pentyl group, a hexyl group, an octyl group, a decyl group, a dodecyl group, a 2-ethylhexyl group, a 3,7-dimethyloctyl group, a benzyl group, an α,α-dimethylbenzyl group, a 1-phenethyl group, a 2-phenethyl group, a vinyl group, a propenyl group, a butenyl group, an oleyl group, an eicosapentaenyl group, a docosahexaenyl group, a 2,2-diphenylvinyl group, a 1,2,2-triphenylvinyl group, a 2-phenyl-2-propenyl group, a phenyl group, a 2-tolyl group, a 4-tolyl group, a 4-trifluoromethylphenyl group, a 4-methoxyphenyl group, a 4-cyanophenyl group, a 2-biphenylyl group, a 3-biphenylyl group, a 4-biphenylyl group, a terphenylyl group, a 3,5-diphenylphenyl group, a 3,4-diphenylphenyl group, a pentaphenylphenyl group, a 4-(2,2-diphenylvinyl)phenyl group, a 4-(1,2,2-triphenylvinyl)phenyl group, a fluorenyl group, a 1-naphthyl group, a 2-naphthyl group, a 9-anthryl group, a 2-anthryl group, or a 9-phenanthryl group. Furthermore, among them, the hydrocarbyl group is more preferably a methyl group, an ethyl group, a 1-propyl group, a 2-propyl group, a 1-butyl group, a 2-butyl group, an isobutyl group, a tert-butyl group, a pentyl group, a hexyl group, an octyl group, a 2-ethylhexyl group, a 3,7-dimethyloctyl group, a benzyl group, or a phenyl group, and still more preferably a methyl group, an ethyl group, a 1-propyl group, a 2-propyl group, a 1-butyl group, a 2-butyl group, an isobutyl group, a tert-butyl group, a pentyl group, or a hexyl group.

The hydrocarbyloxy group is not particularly limited, and may be linear, branched, or cyclic. Examples of the hydrocarbyloxy group include: methoxy group; ethoxy group; 1-propyloxy group; 2-propyloxy group; 1-butoxy group; 2-butoxy group; isobutoxy group; tert-butoxy group; pentyloxy group; hexyloxy group; octyloxy group; decyloxy group; dodecyloxy group; 2-ethylhexyloxy group; 3,7-dimethyloctyloxy group; cyclopropanoxy group; cyclopentyloxy group; cyclohexyloxy group; 1-adamantyloxy group; 2-adamantyloxy group; norbornyloxy group; ammonium ethoxy group; trifluoromethoxy group; benzyloxy group; α,α-dimethylbenzyloxy group; 2-phenethyloxy group; 1-phenethyloxy group; phenoxy group; alkoxyphenoxy group; alkylphenoxy group; 1-naphthyloxy group; 2-naphthyloxy group; and pentafluorophenyloxy group. Among them, the hydrocarbyloxy group is preferably a methoxy group, an ethoxy group, a 1-propyloxy group, a 2-propyloxy group, a 1-butoxy group, a 2-butoxy group, a tert-butoxy group, a pentyloxy group, a hexyloxy group, an octyloxy group, a decyloxy group, a dodecyloxy group, a 2-ethylhexyloxy group, or a 3,7-dimethyloctyloxy group. Furthermore, among them, the hydrocarbyloxy group is more preferably a methoxy group, an ethoxy group, a 1-propyloxy group, a 2-propyloxy group, a 1-butoxy group, a 2-butoxy group, an isobutoxy group, a tert-butoxy group, a pentyloxy group, or a hexyloxy group.

The amino group is not particularly limited, and may be linear, branched, or cyclic. Examples of the amino group include: methylamino group; ethylamino group; 1-propylamino group; 2-propylamino group; 1-butylamino group; 2-butylamino group; isobutylamino group; tert-butylamino group; pentylamino group; hexylamino group; octylamino group; decylamino group; dodecylamino group; 2-ethylhexylamino group; 3,7-dimethyloctylamino group; cyclopropylamino group; cyclopentylamino group; cyclohexylamino group; 1-adamantylamino group; 2-adamantylamino group; norbomylamino group; ammonium-ethylamino group; trifluoromethylamino group; benzylamino group; α,α-dimethylbenzylamino group; 2-phenethylamino group; 1-phenethylamino group; phenylamino group; alkoxyphenylamino group; alkylphenylamino group; 1-naphthylamino group; 2-naphthylamino group; and pentafluorophenylamino group. Among them, the amino group is preferably a methylamino group, an ethylamino group, a 1-propylamino group, a 2-propylamino group, a 1-butylamino group, a 2-butylamino group, a tert-butylamino group, a pentylamino group, a hexylamino group, an octylamino group, a decylamino group, a dodecylamino group, a 2-ethylhexylamino group, or a 3,7-dimethyloctylamino group. Furthermore, among them, the amino group is more preferably a methylamino group, an ethylamino group, a 1-propylamino group, a 2-propylamino group, a 1-butylamino group, a 2-butylamino group, an isobutylamino group, a tert-butylamino group, a pentylamino group, or a hexylamino group.

The silyl group is not particularly limited. Examples of the silyl group include dimethylsilyl group, diethylsilyl group, diphenylsilyl group, trimethylsilyl group, triethylsilyl group, t-butyldimethylsilyl group, t-butyldiphenylsilyl group, and tris(trimethylsilyl) group.

As mentioned above, the compound represented by the formula (1) is preferably a compound in which two quaternary carbons are bound to the N-oxy radical group. In this manner, when a group with a large steric hindrance is bound to a site adjacent to the N-oxy radical group, it is considered that the stability of the radical is enhanced and radical coupling can be suppressed. For this reason, when such a compound is included in the electrolyte layer, it is considered that there can be obtained a carbon dioxide adsorption battery capable of more suitably adsorbing carbon dioxide from a gas that contains carbon dioxide during charging, and capable of releasing carbon dioxide during discharging.

Examples of the compound represented by the formula (1) include: 1,4-di(1-oxy-2,2,6,6-tetramethyl-1-piperidine-4-yloxy)xylene; 4-acetamide-2,2,6,6-tetramethylpiperidine-1-oxyl;N,N-di-tert-butylnitroxide radical; N,N-diphenylnitroxide radical; N,N-dinaphthylnitroxide radical; N,N-di-2-methylphenylnitroxide radical; N,N-di-3-methylphenylnitroxide radical; N,N-di-4-methylphenylnitroxide radical; N,N-di-2-ethylphenylnitroxide radical; N,N-di-2-propylphenylnitroxide radical; N,N-di-2-butylphenylnitroxide radical; N,N-di-2-pentylphenylnitroxide radical; N,N-di-2-hexylphenylnitroxide radical; N,N-di-2-isopropylphenylnitroxide radical; N,N-di-2-isobutylphenylnitroxide radical; N,N-di-2-sec-butylphenylnitroxide radical; N,N-di-2-tert-butylphenylnitroxide radical; N,N-di-4-tert-butylphenylnitroxide radical; N,N-di-(3,5-di-tert-butyl)phenylnitroxide radical; N,N-di-4-pyridylnitroxide radical; N,N-di-4-pyridazylnitroxide radical; poly(ethyleneglycol)-bis-2,2,6,6-tetramethylpiperidinyl oxyradical; N-phenyl-N-oxy-tert-butylamine; N-naphthyl-N-oxy-tert-butylamine; N-tert-butyl-N-oxy-2-quinoline; 2,2,6,6-tetramethylpiperidinyloxy radical (TEMPO); 4-hydroxy-2,2,6,6-tetramethylpiperidinyloxy radical; 4-amino-2,2,6,6-tetramethylpiperidinyloxy radical; 4-carboxy-2,2,6,6-tetramethylpiperidinyloxy radical; 4-methoxy-2,2,6,6-tetramethylpiperidinyloxy radical; 4-oxo-2,2,6,6-tetramethylpiperidinyloxy radical; 4-acetamide-2,2,6,6-tetramethylpiperidinyloxy radical; 4-octyloxy-2,2,6,6-tetramethylpiperidinyloxy radical; 2,2,5,5-tetramethylpyrrolidine-oxy radical; 3-carbamoyl-2,2,5,5-tetramethylpyrrolidine-oxy radical; 3-carboxy-2,2,5,5-tetramethylpyrrolidine-oxy radical; 2,2,6,6-tetramethylmorpholine-N-oxy radical; and 2,2,6,6-tetramethylmorpholine piperazine-N-oxy radical.

Furthermore, as described above, the redox compound may be a polymer compound, and examples thereof include a compound obtained from the polymerization of the compound represented by the formula (1). Examples of the polymer compound include compounds obtained from the polymerization of a monomer such as 4-acryloyloxy-2,2,6,6-tetramethylpiperidinyloxy radical, 4-methacryloyloxy-2,2,6,6-tetramethylpiperidinyloxy radical, 3-acryloyloxy-2,2,6,6-tetramethylpyrrolidinyloxy radical, 3-methacryloyloxy-2,2,6,6-tetramethylpyrrolidinyloxy radical, 4-vinyloyloxy-2,2,6,6-tetramethylpiperidinyloxy radical, or 4-vinyloyloxy-2,2,5,5-tetramethylpyrrolidinyloxy radical. The polymer compound may be a compound obtained by polymerizing the monomer singly, or a compound obtained by polymerizing two or more of the monomers in combination. The polymer compound may be a compound obtained from the polymerization of the compound represented by the formula (1), or may be a copolymer obtained from the copolymerization of the compound represented by the formula (1) with a copolymerizable monomer such as ethylene, propylene, butadiene, isoprene, styrene, or vinyl acetate. The copolymerizable monomer may be used singly, or two or more kinds thereof may be used in combination.

Among the compounds exemplified above, the redox compound is preferably 1,4-di(1-oxy-2,2,6,6-tetramethyl-1-piperidine-4-yloxy)xylene, 4-acetamide-2,2,6,6-tetramethylpiperidine-1-oxyl, or poly(4-methacryloyloxy-2,2,6,6-tetramethylpiperidinyloxy radical). The redox compounds may be used singly, or two or more kinds thereof may be used in combination.

The compound represented by the formula (1) may be a compound obtained from a synthesis by a predetermined synthesis method, or may be a commercially available product. The synthesis method is not particularly limited as long as it is a synthesis method by which the compound represented by the formula (1) is obtained, and examples thereof include a nitro-oxidation method of oxidizing the amino group of the disubstituted amine compound.

Note that the wording "non-volatile" means that the substance does not vaporize or does not rapidly vaporize at normal temperature and pressure. For example, as used herein, 2,2,6,6-tetramethylpiperidine-1-oxyl (TEMPO) is not non-volatile but is volatile. From this reason, as a rough indication of the non-volatile substance, its boiling point at normal pressure is higher than 193°C, which is the boiling point of TEMPO, for example, and the boiling point is preferably 200°C or higher, and more preferably 220°C or higher. Otherwise, as a rough indication of the non-volatile substance, its vapor pressure at 20°C is lower than 0.4 hPa (i.e., less than 0.4 hPa), which is the vapor pressure of TEMPO (at 20°C), for example, and the vapor pressure is preferably lower than 0.2 hPa (i.e., less than 0.2 hPa.).

The electrolyte layer 13 may contain another component besides the electrolytic solution and the redox compound. Examples of another components contained in the electrolyte layer 13 include polyethylene glycol, polyacrylate, polymethacrylate, and polyvinyl alcohol acetal.

The electrolyte layer 13 may include a base material. Examples of the electrolyte layer 13 include one obtained by impregnating the electrolytic solution containing the redox compound in the base material. Examples of the base material include glass fiber filter paper.

The method of manufacturing the electrolyte layer 13 is not particularly limited as long as the electrolyte layer 13 can be manufactured. In a case where the electrolyte layer 13 includes the base material, examples of the manufacturing method thereof include a method in which the redox compound is dispersed or dissolved in the electrolytic solution and then the base material is impregnated with the electrolytic solution containing the redox compound. The impregnation is preferably carried out while applying ultrasonic vibration to the electrolytic solution and the base material. As a result of this, there can be suppressed small holes, namely, pinholes from being formed in the electrolyte layer 13.

### (Separator)

The separator 16 is not particularly limited as long as it suppresses the permeation of the redox compound and is permeable to the electrolytic solution. In other words, the separator 16 is less permeable to the redox compound than to the electrolytic solution. The separator 16 is permeable to the electrolytic solution and is preferably not permeable to the redox compound. The separator 16 is provided such that the electrolyte layer 13 on the side of the positive electrode 11 is spaced apart from the electrolyte layer 13 on the side of the negative electrode 12 such that the separator 16 is permeable to the electrolytic solution and suppresses the permeation of the redox compound. In this manner, the positive electrode 11 and the negative electrode 12 are separated from each other by the separator 16. Examples of the separator 16 include a separator generally used in a lithium secondary battery, and, in particular, is preferably a separator that has a low resistance to ion migration in an electrolyte and is excellent in electrolytic solution moisture absorption capacity. Examples of the material of the separator include glass fiber, polyester, polyethylene, polypropylene, and polytetrafluoroethylene (PTFE). The separator material may be used singly, or two or more kinds thereof may be used in combination. The separator is made of the separator material, and the form thereof may be a nonwoven fabric or a woven fabric. The pore diameter in the separator is not particularly limited, and is preferably, for example, from 0.01 to 10 µm. The thickness of the separator is not particularly limited, and is preferably, for example, from 5 to 300 µm.

As mentioned above, while the carbon dioxide adsorption battery 10 is being charged, a voltage is applied between the pair of electrodes 11 and 12 including the positive electrode 11 and the negative electrode 12 so that the potential of the positive electrode 11 becomes lower than the potential of the negative electrode 12. For this purpose, the carbon dioxide adsorption battery 10 may be provided with a voltage application unit 14. During discharging, as mentioned above, the carbon dioxide adsorption battery 10 is discharged by way of providing a resistor 17 or the like between the pair of electrodes 11 and 12 including the positive electrode 11 and the negative electrode 12. The resistor 17 is not particularly limited as long as the carbon dioxide adsorption battery 10 can be discharged.

The voltage application unit 14 is not particularly limited as long as a voltage can be applied between the pair of electrodes 11 and 12. In other words, as mentioned above, the voltage application unit 14 applies a voltage between the pair of electrodes 11 and 12 so that the potential of the positive electrode 11 becomes lower than the potential of the negative electrode 12. As a result of this, during charging, only by applying a voltage with the voltage application unit 14, the device can be charged while capturing carbon dioxide on the positive electrode 11 side. Note that, the voltage application unit 14 may be an application unit that cannot reverse the polarity of the voltage to be applied between the pair of electrodes 11 and 12, and examples thereof include a secondary battery, an external power supply, and a capacitor.

The method of manufacturing the carbon dioxide adsorption battery 10 is not particularly limited as long as the carbon dioxide adsorption battery having the above structure can be manufactured. Examples of the method of manufacturing the carbon dioxide adsorption battery 10 specifically include a method in which the positive electrode 11, the negative electrode 12, the electrolyte layer 13, and the separator 16 are used, and optionally the flow path 15, the voltage application unit 14, the resistor 17, and the like are used thereby assembling the carbon dioxide adsorption battery so as to have the structure and the like shown in FIGS. 1 and 2 by means of a general assembling method.

The carbon dioxide adsorption battery 10 is charged by applying a voltage to the positive electrode 11 and the negative electrode 12. The carbon dioxide adsorption battery 10 adsorbs carbon dioxide during charging as mentioned above by way of binding carbon dioxide to the redox compound contained in the electrolyte layer 13. After charging, the carbon dioxide adsorption battery 10 releases carbon dioxide during discharging by way of desorbing carbon dioxide from the redox compound contained in the electrolyte layer 13. From this reason, the carbon dioxide adsorption battery 10 is preferably used in order that carbon dioxide is adsorbed during charging and carbon dioxide is released during discharging. Note that the gas released from the carbon dioxide adsorption battery 10 during discharging is a gas having a very high carbon dioxide concentration, since it is mainly the gas being adsorbed on the carbon dioxide adsorption battery 10 during charging. From this reason, the carbon dioxide adsorption battery 10 is capable of concentrating carbon dioxide. In other words, the carbon dioxide adsorption battery 10 can also be used as a device for concentrating carbon dioxide. Furthermore, the carbon dioxide adsorption battery 10 adsorbs carbon dioxide from a gas that contains carbon dioxide during charging and releases carbon dioxide during discharging, so that a gas having a very high carbon dioxide concentration is released. From this reason, the carbon dioxide adsorption battery 10 can also be used as a device for separating carbon dioxide from a gas that contains carbon dioxide.

### [Charge/discharge device]

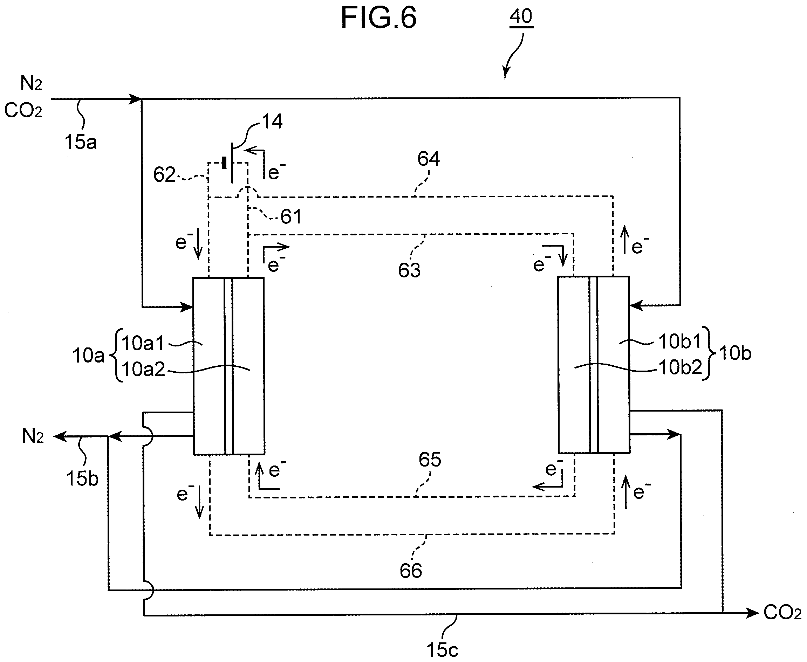

A charge/discharge device according to another embodiment of the present invention is a charge/discharge device including two or more of the carbon dioxide adsorption batteries. The charge/discharge device is not particularly limited as long as it includes two or more of the carbon dioxide adsorption batteries, and examples thereof include a charge/discharge device 40 as illustrated in FIG. 6.

The charge/discharge device 40 includes two of the carbon dioxide adsorption batteries (a first carbon dioxide adsorption battery 10a and a second carbon dioxide adsorption battery 10b). The first carbon dioxide adsorption battery 10a can be charged by way of connecting a negative electrode side 10a2 and a positive electrode side 10a1 each other via the voltage application unit 14 interposed therebetween. In other words, in the charge/discharge device 40, the first carbon dioxide adsorption battery 10a can be charged by way of connecting the negative electrode side 10a2 of the first carbon dioxide adsorption battery 10a to the voltage application unit 14 through a wiring 61 and connecting the voltage application unit 14 to the positive electrode side 10a1 of the first carbon dioxide adsorption battery 10a through a wiring 62. The first carbon dioxide adsorption battery 10a is charged, and thereafter, the positive electrode side 10a1 of the first carbon dioxide adsorption battery 10a and a positive electrode side 10b1 of the second carbon dioxide adsorption battery 10b are connected with each other through a wiring 66, and a negative electrode side 10b2 of the second carbon dioxide adsorption battery 10b and the negative electrode side 10a2 of the first carbon dioxide adsorption battery 10a are connected with each other through a wiring 65, whereby the first carbon dioxide adsorption battery 10a can be discharged and the second carbon dioxide adsorption battery 10b can be charged. The second carbon dioxide adsorption battery 10b is charged (after the first carbon dioxide adsorption battery 10a is discharged), and thereafter, the positive electrode side 10b1 of the second carbon dioxide adsorption battery 10b and the positive electrode side 10a1 of the first carbon dioxide adsorption battery 10a are connected with each other through the wiring 64, and the negative electrode side 10a2 of the first carbon dioxide adsorption battery 10a and the negative electrode side 10b2 of the second carbon dioxide adsorption battery 10b are connected with each other through the wiring 63, whereby the second carbon dioxide adsorption battery 10b can be discharged and the first carbon dioxide adsorption battery 10a can be charged. In this manner, by once charging the first carbon dioxide adsorption battery 10a, the charge/discharge device can serve as a charge/discharge device that can repeat charging and discharging alternately for the second carbon dioxide adsorption battery 10b and the first carbon dioxide adsorption battery 10a. Hence, when the charge/discharge device includes two or more of the carbon dioxide adsorption batteries, the charge/discharge device can repeat charging and discharging alternately for each of the carbon dioxide adsorption batteries. From this reason, this charge/discharge device serves as a charge/discharge device with high energy efficiency. Moreover, the charge/discharge device is capable of separating carbon dioxide. Note that, in the first carbon dioxide adsorption battery 10a and the second carbon dioxide adsorption battery 10b, during charging, a gas that contains carbon dioxide (air which contains nitrogen and carbon dioxide, etc.) is supplied through a flow path 15a, and nitrogen (nitrogen and carbon dioxide that has not been adsorbed) is discharged through a flow path 15b. Furthermore, in the first carbon dioxide adsorption battery 10a and the second carbon dioxide adsorption battery 10b, during discharging, carbon dioxide is emitted from a flow path 15c. Note that, FIG. 6 is a schematic view illustrating a configuration of an example of a charge/discharge device 40 according to an embodiment of the present invention.

Although the present specification discloses various aspects of the technique as stated above, main technologies of them are summarized below.

One aspect of the present invention is a carbon dioxide adsorption battery including: a positive electrode; a negative electrode; a separator disposed between the positive electrode and the negative electrode; and electrolyte layers respectively disposed between the positive electrode and the separator and between the negative electrode and the separator, wherein the positive electrode is a gas-permeable electrode, each of the electrolyte layers includes an electrolytic solution capable of dissolving carbon dioxide, and a redox compound having an N-oxy radical group within a molecule, and the separator suppresses permeation of the redox compound and is permeable to the electrolytic solution.

According to such a configuration, it is possible to provide a carbon dioxide adsorption battery that can be charged while easily adsorbing carbon dioxide from a gas that contains carbon dioxide.

This is considered to be based on the following.

The positive electrode can allow gases present around the positive electrode to permeate therethrough. When gases permeate through the positive electrode, the gases that have permeated through the positive electrode come into contact with the electrolyte layer. As a result, the carbon dioxide contained in the gases present around the positive electrode is dissolved in the electrolytic solution contained in the electrolyte layer.

While the carbon dioxide adsorption battery is being charged, a voltage is applied between the positive electrode and the negative electrode so that the potential of the positive electrode becomes lower than the potential of the negative electrode, in other words, so that the potential of the negative electrode becomes higher than the potential of the positive electrode.

In the redox compound contained in the electrolyte layer on the side close to the positive electrode, an N-oxy radical group is reduced to an N-oxy anion group since the potential of the positive electrode is higher than the potential of the negative electrode. The carbon dioxide dissolved in the electrolytic solution is bound to the N-oxy anion group, so that the carbon dioxide is facilitated to dissolve in the electrolytic solution. From this reason, while the carbon dioxide adsorption battery is being charged, carbon dioxide is captured from the positive electrode side, and carbon dioxide is adsorbed to the electrolyte layer.

On the other hand, in the redox compound contained in the electrolyte layer on the side close to the negative electrode, the N-oxy radical group is oxidized to an N-oxy cation group since the potential of the negative electrode is lower than the potential of the positive electrode.

The separator is permeable to the electrolytic solution, and suppresses the permeation of the redox compound. In other words, the redox compound is less likely to permeate through the separator than the electrolytic solution. For this reason, the redox compound in which the N-oxy radical group is reduced to the N-oxy anion group and the redox compound having carbon dioxide bound are less likely to permeate through the separator to migrate toward the negative electrode side. Therefore, even after charging is stopped, as long as the battery is not discharged, these redox compounds are retained in the electrolyte layer on the side from the separator to the positive electrode side. The redox compound in which the N-oxy radical group is oxidized to the N-oxy cation group is also less likely to permeate through the separator to migrate toward the positive electrode side. Therefore, even after the charge is stopped, as long as the battery is not discharged, the redox compound having the N-oxy cation group within the molecule is retained in the electrolyte layer on the side from the separator to the negative electrode. From these reasons, the carbon dioxide adsorption battery can maintain the charged state.

As described above, it is considered that the carbon dioxide adsorption battery can be charged while easily adsorbing carbon dioxide from a gas that contains carbon dioxide. Moreover, the carbon dioxide adsorption battery also is excellent in durability because of using not the quinone compound but a redox compound having an N-oxy radical group within the molecule, which is more durable than the quinone compound.

As described above, when the charged carbon dioxide adsorption battery is discharged, the N-oxy cation group is reverted to the N-oxy radical group in the electrolyte layer on the side from the separator to the negative electrode. In the electrolyte layer on the side from the separator to the positive electrode, carbon dioxide is desorbed from the redox compound, and the N-oxy anion group is reverted to the N-oxy radical group. Therefore, the carbon dioxide adsorption battery can release carbon dioxide from the positive electrode side during discharging. The gas released from the carbon dioxide adsorption battery during discharging is mainly the gas adsorbed on the carbon dioxide adsorption battery during charging, and thus is a gas having a very high carbon dioxide concentration. From this reason, the carbon dioxide adsorption battery is capable of concentrating carbon dioxide.

Therefore, the carbon dioxide adsorption battery can adsorb carbon dioxide during charging and release carbon dioxide during discharging, whereby carbon dioxide can be concentrated by this way of adsorption and release. In addition, the adsorption and release are carried out by way of applying a voltage between the positive electrode and the negative electrode, and hence the adsorption and release are not required to be carried out at high temperature or at high pressure and hence can be carried out at normal temperature and at atmospheric pressure.

In the carbon dioxide adsorption battery, the negative electrode preferably includes a gas permeation blocking portion that hinders gas permeation.

According to such a configuration, the device can be charged while easily adsorbing carbon dioxide from a gas that contains carbon dioxide, and is capable of further maintaining the charged state.

In the carbon dioxide adsorption battery, the negative electrode is preferably configured so as to avoid contact with outside air.

According to such a configuration, the device can be charged while easily adsorbing carbon dioxide from a gas that contains carbon dioxide, and is capable of further maintaining the charged state.

The reason why the device can be charged while easily adsorbing carbon dioxide from a gas that contains carbon dioxide, and is capable of further maintaining the charged state as described above in the case where the negative electrode includes the gas permeation blocking portion that hinders the gas permeation and in the case where the negative electrode is configured so as to avoid contact with the outside air is considered to be based on the following.

In the carbon dioxide adsorption battery, as mentioned above, the migration of the redox compound is suppressed by the separator, and the redox compound may possibly permeate through the separator. For instance, in the carbon dioxide adsorption battery, the above-mentioned redox compound having carbon dioxide bound may possibly migrate across the separator from the positive electrode side to the negative electrode side in the electrolyte layer. When the redox compound having carbon dioxide bound migrates in this way during charging or in a state where the charged state is maintained, the redox compound is oxidized in the vicinity of the negative electrode, carbon dioxide is desorbed from the redox compound, and the N-oxy anion group is reverted to the N-oxy radical group. During this occasion, if carbon dioxide is released from the negative electrode side, then the redox compound having carbon dioxide bound can be facilitated to migrate. Hence, it can be considered that when the negative electrode includes a gas permeation blocking portion that hinders the gas permeation and when the negative electrode is configured so as to avoid contact with the outside air, such facilitation of the migration can be prevented from occurring, and the charged state can be further maintained.

As mentioned above, the carbon dioxide adsorption battery is configured to adsorb carbon dioxide during charging and to release carbon dioxide during discharging. From this reason, the carbon dioxide adsorption battery is preferably used in order that carbon dioxide is adsorbed during charging and carbon dioxide is released during discharging.

In the carbon dioxide adsorption battery, the redox compound is preferably a compound in which two quaternary carbons are bound to the N-oxy radical group.

According to such a configuration, carbon dioxide can be further adsorbed from the gas that contains carbon dioxide, and the charged state can be further maintained. This is considered to be based on that the bonding and elimination of carbon dioxide to and from the redox compound can be more suitably carried out.

In the carbon dioxide adsorption battery, the redox compound is preferably a compound represented by the following formula (1) or a compound having a group obtained by eliminating one hydrogen atom from a compound represented by the following formula (1).

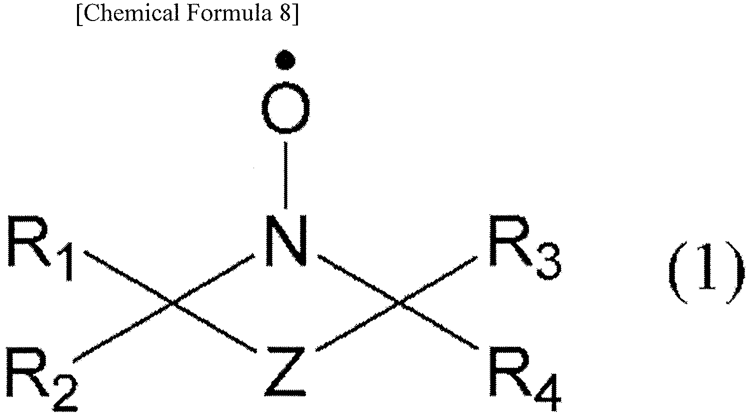

In the formula (1), Z represents -CR₅R₆CR₇R₈-, -CR₉R₁₀CR₁₁R₁₂CR₁₃R₁₄-, -(CR₁₅R₁₆)O-, - (CR₁₇R₁₈)NR₂₇-, -(CR₁₉R₂₀)O(CR₂₁R₂₂)-, or -(CR₂₃R₂₄)NR₂₈(CR₂₅R₂₆)-, and R₁ to R₂₈ each independently represent a hydrogen atom or a substituent.

According to such a configuration, carbon dioxide can be further adsorbed from the gas that contains carbon dioxide, and the charged state can be further maintained. This is considered to be based on that the bonding and elimination of carbon dioxide to and from the redox compound can be more suitably carried out.

In the carbon dioxide adsorption battery, the positive electrode is preferably made of a conductive material containing at least one selected from the group consisting of graphite, carbon nanotubes, activated carbon, and carbon fibers.

According to such a configuration, carbon dioxide can be further adsorbed from the gas that contains carbon dioxide, and the charged state can be further maintained. This is considered to be based on that carbon dioxide can more suitably permeate through the positive electrode, and a voltage can be more suitably applied between the positive electrode and the negative electrode during charging.

Another aspect of the present invention is a charge/discharge device including two or more of the above carbon dioxide adsorption batteries.

According to such a configuration, as mentioned above, a charge/discharge device including the carbon dioxide adsorption battery can be provided. When the charge/discharge device includes two or more of the carbon dioxide adsorption batteries, charging and discharging can be alternately repeated for each of the carbon dioxide adsorption batteries. Specifically, first of all, one of the carbon dioxide adsorption batteries (first battery) is charged. Thereafter, another carbon dioxide adsorption battery (second battery) connected to the first battery can be charged by discharging the first battery. Thereafter, the first battery can be charged by discharging the second battery. In this manner, by once charging the first battery, the charge/discharge device can serve as a charge/discharge device by which charging and discharging can be alternately repeated for the second battery and the first battery. From this reason, this charge/discharge device serves as a charge/discharge device with high energy efficiency. Moreover, the charge/discharge device is capable of separating carbon dioxide.

According to the present invention, it is possible to provide a carbon dioxide adsorption battery that can be charged while easily adsorbing carbon dioxide from a gas that contains carbon dioxide. Furthermore, according to the present invention, a charge/discharge device including the carbon dioxide adsorption battery can be provided.

Hereinafter, the present invention will be specifically described with reference to examples, but the present invention is not limited thereto.

### Examples

### [Example 1]

### <Preparation of carbon dioxide adsorption battery>

A carbon dioxide adsorption battery having the structure illustrated in FIGS. 1 and 2 was prepared by the following procedure.

### (Electrolyte layer)

To 100.0 g of dimethylformamide (manufactured by FUJIFILM Wako Pure Chemical Corporation), 6.5 g of poly(vinylidenefluoride-co-hexafluoropropylene) (manufactured by Sigma-Aldrich Co. LLC.) was added and dissolved by stirring the resulting mixture for 3 hours at 80°C. Next, to the obtained solution was added 24.0 g of a compound: [poly(4-methacryloyloxy-2,2,6,6-tetramethylpiperidinyloxy radical)] (non-volatile), which was obtained from polymerization by a conventional anionic polymerization method using monomer: 4-methacryloyloxy-2,2,6,6-tetramethylpiperidinyloxy radical (manufactured by Tokyo Chemical Industry Co., Ltd.) as the redox compound, and was dissolved by stirring the resulting mixture at 80°C for 3 hours. Next, to the obtained solution was added 12.9 g of an ionic liquid: [1-ethyl-3-methylimidazolium bis(fluorosulfonyl)imide (non-volatile) (EMImFSI manufactured by Sigma-Aldrich Co. LLC.)] as an electrolytic solution capable of dissolving carbon dioxide, heated to 40°C, and stirred and mixed for 3 hours. Using the liquid thus obtained, a liquid film having a thickness of 500 µm was prepared on a glass plate with use of an applicator, and dried under reduced pressure for 8 hours at 60°C. The dried film obtained by the drying was peeled off from the glass plate. As a result of this, a dried film having a thickness of 100 µm was obtained. The obtained dried film cut into a size of 20 mm in length × 24 mm in width was used as an electrolyte layer. The obtained electrolyte layer was visually inspected and no small holes (pinholes) were confirmed.

### (Electrode: positive electrode and negative electrode)

A plurality of carbon paper sheets (GDL35BC manufactured by SGL CARBON Japan Ltd.) were cut into a size of 30 mm in length × 30 mm in width × 1 mm in thickness.

As a positive electrode, one obtained by affixing a conductive copper foil tape (used as a tab) to one surface of the cut carbon paper sheet was used.

As a negative electrode, one (negative electrode including negative electrode main body and gas permeation blocking portion) obtained by adhering a copper foil (gas permeation blocking portion) of 30 mm in length × 30 mm in width × 8 mm in thickness to one surface of the cut carbon paper sheet (negative electrode main body) with a conductive adhesive (DOTITE D-550 manufactured by Fujikura Kasei Co., Ltd.) was used.

### (Separator)

As a separator, one obtained by cutting a polypropylene-based separator (Celgard #2400 manufactured by Polypore International Inc.) into a size of 30 mm in length × 30 mm in width was used.

### (Flow path)

A resin plate made of polytetrafluoroethylene was cut into a size of 50 mm in length × 50 mm in width × 5 mm in thickness, and two holes were made at appropriate positions therein. A groove having a depth of 1 mm × a length of 20 mm × a width of 20 mm connected to the holes was made in the cut resin plate. This groove was used as a flow path.

### (Carbon dioxide adsorption battery)

A carbon dioxide adsorption battery was produced so as to have a structure as illustrated in FIGS. 1 and 2 except that the electrolyte layers were laminated on both surfaces of the separator, the positive electrode was laminated on one surface of the laminated body, and the negative electrode was laminated on the other surface of the laminated body, and the flow path was assembled on both surfaces of the laminated body thereby forming a flow path also on the negative electrode side. Note that, in the carbon dioxide adsorption battery produced here, a flow path was formed also on the negative electrode side in order to verify that there were no gas leakage from the negative electrode side. When the carbon dioxide adsorption battery is charged, a power source as a voltage application unit was connected between the conductive copper foil tape of the positive electrode and the copper foil of the negative electrode as illustrated in FIG. 1. When the carbon dioxide adsorption battery is discharged, a resistor was connected between the conductive copper foil tape of the positive electrode and the copper foil of the negative electrode as illustrated in FIG. 2.

### [Evaluation]

The carbon dioxide adsorption battery was evaluated by the following evaluation method.

First of all, the carbon dioxide adsorption battery was installed in an environment at room temperature (28°C), and a gas pack filled with carbon dioxide was attached to the hole of the flow path on the positive electrode (cathode side electrode) side. A gas pack filled with nitrogen was attached to the hole of the flow path on the negative electrode (anode side electrode) side. A portable carbon dioxide concentration meter (CGP-31 manufactured by DKK-TOA CORPORATION) was attached to each of the hole of the flow path on the positive electrode (cathode side electrode) side and the hole of the flow path on the negative electrode (anode side electrode) side. The carbon dioxide concentration measured at the time of attachment was 0.4% (4000 ppm). Thereafter, by adjusting the power source, the battery was charged at a constant current of 0.25 mA until the voltage between the electrodes (between the positive electrode and the negative electrode) reached 4 V, and then discharged until the voltage reached 3 V, thereby measuring the discharge characteristics of the carbon dioxide adsorption battery. Specifically, the discharge characteristics measurement (discharge rate characteristics evaluation) of the carbon dioxide adsorption battery were carried out as follows.

### Evaluation of discharge rate characteristics

Using a charge-discharge test system (TOSCAT manufactured by Toyo System Co., Ltd.), the carbon dioxide adsorption battery was charged at a constant current of 2.5 mA until the voltage reached up to 4 V, and then charged at a constant voltage of 4 V until the current reached to 0.25 mA. Thereafter, the battery was discharged at a constant discharge current of 1C (2.5 mA), and the discharge capacity (mAh/g) at that time was measured. Note that the discharge capacity was determined as a capacity per weight of the radical material in order to facilitate the comparison of the efficiency of the radical material.

At the time of measuring the discharge rate characterization, after charging, the residual carbon dioxide concentration (CO₂ concentration after charging) was measured with the portable carbon dioxide concentration meter (CGP-31 manufactured by DKK-TOA CORPORATION) attached to the hole of the flow path on the positive electrode (cathode side electrode) side. After discharging, the carbon dioxide concentration (CO₂ concentration after discharging) was measured with the portable carbon dioxide concentration meter attached to the hole of the flow path on the positive electrode (cathode side electrode) side. It was confirmed that there was no gas leakage from the flow path formed on the negative electrode side.

These results are shown in Table 1.

### [Example 2]

A carbon dioxide adsorption battery was produced in the same manner as in Example 1 except that instead of using poly(4-methacryloyloxy-2,2,6,6-tetramethylpiperidinyloxy radical), 42.9 g of 1-butyl-3-methylimidazolium bis(trifluoromethylsulfonylimide) was used as an electrolytic solution (ionic liquid) capable of dissolving carbon dioxide. By using the thus obtained carbon dioxide adsorption battery, the same evaluation as in Example 1 was performed. It was confirmed that there was no gas leakage from the flow path formed on the negative electrode side.

These results are shown in Table 1.

### [Example 3]

A carbon dioxide adsorption battery was produced in the same manner as in Example 1 except that instead of using the negative electrode including the negative electrode main body and the gas permeation blocking portion, the electrode (one obtained by laminating a conductive copper foil tape (used as a tab) to one surface of the cut carbon paper sheet) same as the positive electrode was used as the negative electrode, in other words, the negative electrode not including the gas permeation blocking portion was used as the negative electrode. By using the thus obtained carbon dioxide adsorption battery, the same evaluation as in Example 1 was performed. It was confirmed that there was no gas leakage from the flow path formed on the negative electrode side.

These results are shown in Table 1.

### [Example 4]

A carbon dioxide adsorption battery was produced in the same manner as in Example 1 except that, instead of using one obtained by laminating a conductive copper foil tape (used as a tab) on one surface of the cut carbon paper sheet, the following positive electrode was used as the positive electrode. By using the thus obtained carbon dioxide adsorption battery, the same evaluation as in Example 1 was performed. It was confirmed that there was no gas leakage from the flow path formed on the negative electrode side.

These results are shown in Table 1.

Activated carbon (YP-50 manufactured by Kuraray Co., Ltd.), a styrene-butadiene rubber (SBR) (TRD2001 manufactured by JSR Corporation), carboxymethyl cellulose (CMC) (CELLOGEN BSH manufactured by DKS Co., Ltd.), and carbon black (Super-P manufactured by TIMCAL Graphite & Carbon) were mixed with water so as to be in the ratio of activated carbon: SBR: CMC: carbon black = 90: 3:2:5 (in mass ratio) to give a slurry. Instead of using the carbon paper sheet, a stainless steel mesh (Stainless steel mesh manufactured by Clever Co., Ltd., stainless steel: 304; Mesh Count: 635) was used, and the obtained slurry was applied to the stainless steel mesh with a bar coater, and then dried at 150°C for 7 hours under reduced-pressure atmosphere by using a glass tube oven to give an activated carbon-coated electrode (thickness of the activated carbon portion: 150 µm). This electrode was used as a positive electrode.

### [Comparative Example 1]

In 30.0 g of toluene, there was dissolved 28.4 g of a compound: [poly(4-methacryloyloxy-2,2,6,6-tetramethylpiperidinyloxy radical)] (non-volatile), which was obtained from polymerization by a conventional anion polymerization method using a redox compound: 4-methacryloyloxy-2,2,6,6-tetramethylpiperidinyloxy radical (manufactured by Tokyo Chemical Industry Co., Ltd.) as a monomer. The thus obtained solution was dropped on the entire surface of a piece of glass fiber filter paper (GC50 manufactured by ADVANTEC TOYO KAISHA, LTD.). Thereafter, the piece of the glass fiber filter paper on which the solution had been dropped was dried under a nitrogen atmosphere. As a result of this, toluene was removed, and a solid electrolyte layer was obtained. A device was produced in the same manner as in Example 1 except that this solid electrolyte layer was used. By using thus obtained device, the same evaluation as in Example 1 was performed. It was confirmed that there was no gas leakage from the flow path formed on the negative electrode side. This device is simply referred to as a device since it does not adsorb carbon dioxide and does not store electricity.

These results are shown in Table 1.

### [Comparative Example 2]

A carbon dioxide adsorption battery was produced in the same manner as in Example 1 except that no redox compound was added. By using the thus obtained carbon dioxide adsorption battery, the same evaluation as in Example 1 was performed. It was confirmed that there was no gas leakage from the flow path formed on the negative electrode side. This device is simply referred to as a device since it does not adsorb carbon dioxide and does not store electricity.

These results are shown in Table 1.

Note that, "-" in the column of discharge capacity in Table 1 indicates that the battery could not store electricity (the charged state could not be maintained).

**Table 1**

| | Discharge capacity (mAh/g) | CO₂ concentration after charge (ppm) | CO₂ concentration after discharge (ppm) |
|---|---|---|---|
| Example 1 | 98 | 1200 | 3892 |
| Example 2 | 96 | 1320 | 3991 |
| Example 3 | 91 | 1456 | 3641 |
| Example 4 | 109 | 1120 | 3918 |
| Comparative Example 1 | - | 4000 | 4000 |
| Comparative Example 2 | - | 4000 | 4000 |

### [Comparative Example 3]

A device was produced in the same manner as in Example 1 except that, instead of using the negative electrode including the negative electrode main body and the gas permeation blocking portion, the electrode (one obtained by laminating a conductive copper foil tape (used as a tab) to one surface of the cut carbon paper sheet) same as the positive electrode was used as the negative electrode, and a separator was not included. Note that, this device is referred to as a carbon dioxide separation device since this device does not adsorb carbon dioxide and does not store electricity.

First of all, the carbon dioxide separation device was installed in an environment at room temperature (28°C), and a gas pack filled with carbon dioxide was attached to the hole of the flow path on the cathode side electrode side, and a gas pack filled with nitrogen was attached to the hole of the anode side flow path. Subsequently, the portable carbon dioxide concentration meter was attached to the hole of the flow path on the cathode side electrode side and to the hole of the flow path on the anode side electrode side. The carbon dioxide concentration measured at the time of attachment was 0.4% (4000 ppm). Subsequently, by adjusting the power supply, a constant current of 0.25 mA was applied between the electrodes until the voltage reached up to 4 V.

In the carbon dioxide separation device, by applying a voltage, the carbon dioxide concentration measured with the carbon dioxide gas concentration meter on the cathode side began to decrease, and the carbon dioxide concentration measured with the carbon dioxide gas concentration meter on the anode side began to increase. Thereafter, the voltage was applied for 2 hours, then the voltage application was interrupted to stop the current, consequently the voltage between both electrodes rapidly decreased, and it was confirmed that the device was not charged. The carbon dioxide concentration measured with the carbon dioxide gas concentration meter on the cathode side was 270 ppm, and the carbon dioxide concentration measured with the carbon dioxide gas concentration meter on the anode side was 3520 ppm. This device can allow carbon dioxide to permeate from the cathode side to the anode side by applying a voltage, but the device could not be charged.

Table 1 shows that the carbon dioxide adsorption battery including the positive electrode, the negative electrode, the separator, and the electrolyte layer was chargeable when the electrolytic solution capable of dissolving carbon dioxide and the redox compound having an N-oxy radical group within the molecule were contained in the electrolyte layer (Examples 1 to 4). It was confirmed that the carbon dioxide adsorption batteries according to Examples 1 to 4 adsorbed carbon dioxide during charging based on the observation that the carbon dioxide concentration on the positive electrode side decreased. It was also confirmed that the carbon dioxide adsorption batteries according to Examples 1 to 4 released the adsorbed carbon dioxide based on the observation that the carbon dioxide concentration on the positive electrode side went back to almost the concentration before charging when the batteries were charged and then discharged.

In contrast, the battery could not be charged and could not store electricity when using a solid electrolyte layer that includes the redox compound having an N-oxy radical group within the molecule but did not contain the electrolytic solution capable of dissolving carbon dioxide (Comparative Example 1). It was also confirmed that the device according to Comparative Example 1 did not adsorb carbon dioxide based on the observation that the carbon dioxide concentration on the positive electrode side did not decrease even when a voltage was applied between the electrodes in an attempt to charge the device. When using an electrolyte layer that contained the electrolytic solution capable of dissolving carbon dioxide but did not contain the redox compound having an N-oxy radical group within the molecule (Comparative Example 2), the device also could not be charged and could not store electricity, as in the case of the device according to Comparative Example 1. It was also confirmed that the device according to Comparative Example 2 did not adsorb carbon dioxide based on the observation that the carbon dioxide concentration on the positive electrode side did not decrease even when a voltage was applied between the electrodes in an attempt to charge the device. The reason why these devices could not be charged and could not adsorb carbon dioxide even when a voltage was applied between the electrodes in an attempt to charge the devices is considered to be that carbon dioxide cannot be bound to the redox compound even when a voltage was applied between the electrodes in an attempt to charge the devices.

The device having no separator (Comparative Example 3) also could not be charged and could not store electricity. It was confirmed that the device according to Comparative Example 3 adsorbed carbon dioxide, based on the observation that the carbon dioxide concentration on the positive electrode side decreased when a voltage was applied between the electrodes in an attempt to charge the device. This is considered to be due to that carbon dioxide was bound to the redox compound. On the other hand, it was confirmed that carbon dioxide was released from the electrode based on the observation that the concentration of carbon dioxide on the anode side increased while a voltage was being applied between the electrodes in an attempt to charge the device. This is considered to be due to that the redox compound to which carbon dioxide was bound reached up to the electrode on the anode side because of the absence of the separator, where carbon dioxide was desorbed from the redox compound. From this reason, it is considered that the device according to Comparative Example 3 cannot be charged and cannot store electricity.

This application is based on Japanese Patent Application No. 2021-034204 filed on March 4, 2021, the contents of which are included in the present application.

The present invention has been appropriately and fully described above through the embodiments in order to express the present invention, however, it should be understood that a person skilled in the art can easily modify and/or improve the above-described embodiments. Therefore, the modified embodiment or the improved embodiment is construed to be included in the scope of the claims unless the modification or improvement made by a person skilled in the art is at a level that departs from the scope of the claims stated in the claims.

### Industrial Applicability

According to the present invention, there is provided a carbon dioxide adsorption battery that can be charged while easily adsorbing carbon dioxide from a gas that contains carbon dioxide. Furthermore, according to the present invention, there is provided a charge/discharge device including the carbon dioxide adsorption battery.

## Claims

1. A carbon dioxide adsorption battery comprising:
a positive electrode;
a negative electrode;
a separator disposed between the positive electrode and the negative electrode; and
electrolyte layers respectively disposed between the positive electrode and the separator and between the negative electrode and the separator,
wherein the positive electrode is a gas-permeable electrode,
each of the electrolyte layers includes an electrolytic solution capable of dissolving carbon dioxide, and a redox compound having an N-oxy radical group within a molecule, and
the separator suppresses permeation of the redox compound but is permeable to the electrolytic solution.

2. The carbon dioxide adsorption battery according to claim 1, wherein the negative electrode includes a gas permeation blocking portion that hinders gas permeation.

3. The carbon dioxide adsorption battery according to claim 1, wherein the negative electrode is configured so as to avoid contact with outside air.

4. The carbon dioxide adsorption battery according to any one of claims 1 to 3, configured to adsorb carbon dioxide during charging, and to release carbon dioxide during discharging.

5. The carbon dioxide adsorption battery according to any one of claims 1 to 4, wherein the redox compound is a compound in which two quaternary carbons are bound to the N-oxy radical group.

6. The carbon dioxide adsorption battery according to any one of claims 1 to 5, wherein
the redox compound is a compound represented by the following formula (1), or a compound having a group obtained by eliminating one hydrogen atom from a compound represented by the following formula (1): 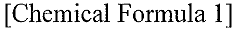 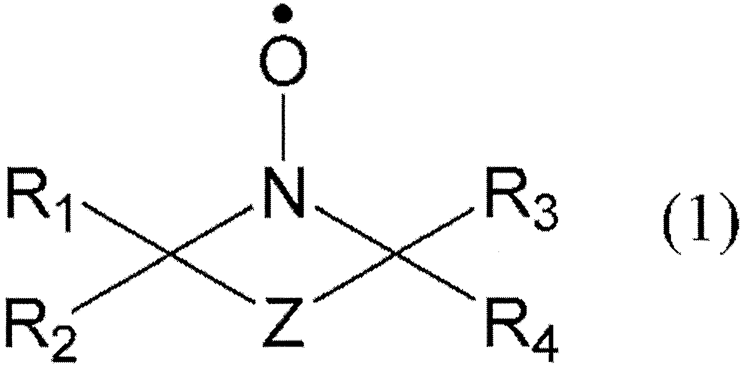 [in the formula (1), Z represents -CR₅R₆CR₇R₈-, -CR₉R₁₀CR₁₁R₁₂CR₁₃R₁₄-, -(CR₁₅R₁₆)O-, - (CR₁₇R₁₈)NR₂₇-, -(CR₁₉R₂₀)O(CR₂₁R₂₂)-, or -(CR₂₃R₂₄)NR₂₈(CR₂₅R₂₆)-, and R₁ to R₂₈ each independently represent a hydrogen atom or a substituent].

7. The carbon dioxide adsorption battery according to any one of claims 1 to 6, wherein the positive electrode is made of a conductive material containing at least one selected from the group consisting of graphite, carbon nanotubes, activated carbon, and carbon fibers.

8. A charge/discharge device comprising two or more of the carbon dioxide adsorption batteries according to any one of claims 1 to 7.
